(19) Europäisches Patentamt / European Patent Office / Office européen des brevets

(11) **EP 4 550 914 A1**

(12) **EUROPEAN PATENT APPLICATION**
published in accordance with Art. 153(4) EPC

(43) Date of publication:
**07.05.2025 Bulletin 2025/19**

(21) Application number: **22948643.6**

(22) Date of filing: **30.06.2022**

(51) International Patent Classification (IPC):
**H04W 72/12** *(2023.01)*    **H04W 72/04** *(2023.01)*
**H04L 5/00** *(2006.01)*

(52) Cooperative Patent Classification (CPC):
**Y02D 30/70**

(86) International application number:
**PCT/CN2022/103180**

(87) International publication number:
**WO 2024/000541 (04.01.2024 Gazette 2024/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **ZHU, Yajun**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **RESOURCE DETERMINING METHOD AND APPARATUS, MULTI-CARRIER SCHEDULING METHOD AND APPARATUS, AND STORAGE MEDIUM**

(57)    A resource determining method and apparatus, a multi-carrier scheduling method and apparatus, and a storage medium. The resource determining method comprises: receiving downlink control information (DCI) sent by a base station, the DCI being used for scheduling data transmission of a plurality of cells (201); determining a sub-band parameter value allocated to a first cell within a frequency domain resource range, the first cell being any one of the plurality of cells (202); and on the basis of a frequency domain resource allocation (FDRA) domain indication value in the DCI and the subband parameter value of the first cell, determining a frequency domain resource of data transmission of the first cell (203). On the basis of ensuring DCI scheduling flexibility, DCI bit overhead is reduced, the problem of reduced DCI transmission efficiency is effectively avoided, and availability is high.

receiving downlink control information (DCI) sent by a base station; wherein the DCI is configured to schedule data transmission of a plurality of cells — 201

determining a subband parameter value of a first cell allocated within a frequency domain resource range — 202

determining a frequency domain resource for data transmission of the first cell based on an indication value of a frequency domain resource allocation (FDRA) field in the DCI and the subband parameter value of the first cell — 203

FIG. 2

**Description**

**TECHNICAL FIELD**

The present disclosure relates to the field of communication technologies, especially to a resource determination method, a multi-carrier scheduling method, an apparatus and a storage medium.

**BACKGROUND**

The 5th generation mobile communication technology (5G) new radio (NR) technology operates in a relatively wide spectrum range. With re-farming of a frequency domain band (band) corresponding to an existing cellular network, utilization of the corresponding spectrum will steadily increase. However, for frequency range 1 (FR1), an available frequency domain resource is gradually fragmented. In order to meet different spectrum demands, it is required to utilize these dispersed spectrum resources with higher spectrum, power efficiency and a more flexible way to achieve higher network throughput and good coverage.

Based on related mechanisms, one piece of downlink control information (DCI) in an existing serving cell only allows scheduling data of one cell. With gradual fragmentation of frequency resources, a demand for scheduling data of a plurality of cells will gradually increase. Therefore, it is required to introduce the DCI for scheduling data of the plurality of cells.

In a Release-18 (Rel-18) scenario, a single DCI may schedule three or more cells simultaneously. If it is still to perform simple expansion on a frequency domain resource allocation (FDRA) field in the DCI based on the method in the related art, the number of bits occupied by the FDRA field will be significantly increased, a bit overhead of the DCI is increased, and a transmission resource of the DCI is reduced.

**SUMMARY**

In order to overcome the problems in the related arts, embodiments of the present disclosure provide a resource determination method, a multi-carrier scheduling method, an apparatus and a storage medium.

According to a first aspect of an embodiment of the present disclosure, there is provided a resource determination method, performed by a terminal. The method includes:

receiving downlink control information (DCI) sent by a base station, in which the DCI is configured to schedule data transmission of a plurality of cells;

determining a subband parameter value of a first cell allocated within a frequency domain resource range, in which the first cell is any one of the plurality of cells; and

determining a frequency domain resource for data transmission of the first cell based on an indication value of a frequency domain resource allocation (FDRA) field in the DCI and the subband parameter value of the first cell.

Alternatively, the subband parameter value is any of:

a number of subbands; or
a subband granularity.

Alternatively, the method further includes any of:

determining the subband parameter value of the first cell based on a signaling indication sent by the base station; or
determining the subband parameter value of the first cell based on a protocol agreement.

Alternatively, determining the frequency domain resource for the data transmission of the first cell based on the indication value of the FDRA field in the DCI and the subband parameter value of the first cell includes:

determining a resource block (RB) range occupied by each subband of the first cell based on a number of RBs occupied by a frequency domain resource range of the first cell and the subband parameter value of the first cell;
determining a first subband index for the data transmission of the first cell based on the indication value of the FDRA field;
determining a RB range occupied by a first subband as the frequency domain resource for the data transmission of the first cell.

Alternatively, the plurality of cells have different numbers of subbands, and the FDRA field is configured to indicate:

a reference subband index for data transmission of a reference cell; wherein the reference cell is a cell different from the first cell among the plurality of cells.

Alternatively, determining the first subband index for the data transmission of the first cell based on the indication value of the FDRA field includes:

determining the reference subband index based on a bit value of the FDRA field;
determining that the first subband index for the data transmission of the first cell is equal to the reference subband index in a case that the reference subband index is within a subband index range of the first cell;
determining that the first subband index for the data transmission of the first cell is equal to a preset subband index in a case that the reference subband index is beyond the subband index range of the first cell.

Alternatively, the DCI includes a plurality of FDRA fields; in which the number of FDRA fields included in the DCI is equal to the number of cells in the plurality of cells;
an i-th FDRA field is configured to indicate:
a subband index for data transmission of an i-th scheduled cell among the plurality of cells, where i is a positive integer less than or equal to the number of cells.

Alternatively, a cell index of the i-th scheduled cell is less than a cell index of an (i+1)-th scheduled cell; or the cell index of the i-th scheduled cell is greater than the cell index of the (i+1)-th scheduled cell.

Alternatively, determining the first subband index for the data transmission of the first cell based on the indication value of the FDRA field includes:

determining a first FDRA field corresponding to the first cell in a plurality of FDRA fields comprised in the DCI;
determining the first subband index for the data transmission of the first cell based on a bit value of the first FDRA field.

Alternatively, the plurality of cells have the same number of subbands, and the FDRA field is configured to indicate:
a subband index of any one of the plurality of cells for data transmission; in which the subband index of each cell of the plurality of cells for data transmission is the same.

Alternatively, determining the frequency domain resource for the data transmission of the first cell based on the indication value of the FDRA field in the DCI and the subband parameter value of the first cell includes:

determining a RB range occupied by each subband of the first cell based on a number of RBs occupied by a frequency domain resource range of the first cell and the subband parameter value of the first cell;
determining a starting RB index for the data transmission of the first cell based on the indication value of the FDRA field;
determining a number of continuous RBs for the data transmission of the first cell.

Alternatively, the FDRA field is configured to indicate:

a reference subband index for data transmission of a reference cell; wherein the reference cell is a cell different from the first cell among the plurality of cells;
offsets of starting RB indexes for data transmissions of other cells except the reference cell in the plurality of cells relative to a starting position and/or a maximum frequency domain position of the reference subband.

Alternatively, a granularity of the offset is any of:

a RB;
a RBG; or
a specified subband including a specified number of RBs.

Alternatively, determining the starting RB index for the data transmission of the first cell based on the indication value of the FDRA field includes:

determining an offset corresponding to the first cell based on a bit value of a first bit interval corresponding to the first cell in the FDRA field;
determining the starting RB index for the data transmission of the first cell based on the reference subband index and the offset corresponding to the first cell.

Alternatively, in the FDRA domain, a reference bit interval corresponding to the reference cell is prior to other bit intervals;

in the other bit intervals, a cell index corresponding to an m-th bit interval is less than a cell index corresponding to an (m+1)-th bit interval; or
the cell index corresponding to the m-th bit interval is greater than the cell index corresponding to the (m+1)-th bit interval; where m is a positive integer smaller than the number of cells scheduled by the DCI.

Alternatively, determining the starting RB index for the data transmission of the first cell based on the reference subband index and the offset corresponding to the first cell includes:

determining that the first subband index for the data transmission of the first cell is equal to the reference subband index in a case that the reference subband index is within a subband index range of the first cell;
determining that the first subband index for the data transmission of the first cell is equal to a preset subband index in a case that the reference subband index is beyond the subband index range of the first cell;
determining the starting RB index for the data transmission of the first cell based on the starting RB index of the first subband and the offset corresponding to the first cell.

Alternatively, determining the number of continuous RBs for the data transmission of the first cell includes any of:

determining that the number of continuous RBs for the data transmission of the first cell is equal to a number of RBs included in a reference subband of the reference cell;
determining that the number of continuous RBs for the data transmission of the first cell is equal to a number of RBs included in the first subband.

According to a second aspect of an embodiment of the present disclosure, there is provided a multi-carrier scheduling method, performed by a base station. The method includes:

determining a frequency domain resource for data transmission of each cell scheduled by downlink control information (DCI); in which the DCI is configured to schedule data transmission of a plurality of cells;
determining a subband parameter value of each cell allocated within a frequency domain resource range;
determining a bit value of a frequency domain resource allocation (FDRA) field in the DCI at least based on a frequency domain resource and a subband parameter value of one of the plurality of cells; and sending the DCI to a terminal.

Alternatively, the subband parameter value is any of:

a number of subbands; or
a subband granularity.

Alternatively, the method further includes any of:

sending a signaling indicating the subband parameter value of each cell to the terminal; or
determining the subband parameter value of each cell based on a protocol agreement.

Alternatively, determining the frequency domain resource for the data transmission of each cell scheduled by the DCI includes:

determining a resource block (RB) range occupied by each subband of the first cell based on a number of RBs occupied by a frequency domain resource range of the first cell and the subband parameter value of the first cell, wherein the first cell is any one of the plurality of cells;
determining the first subband index for the data transmission of the first cell;
determining that the frequency domain resource for the data transmission of the first cell is a RB range occupied by a first subband.

Alternatively, determining the first subband index for the data transmission of the first cell includes:

determining that the first subband index is equal to a reference subband index in a case that the reference subband index for the data transmission of the reference cell is within a subband index range of the first cell; in which the reference cell is a cell different from the first cell among the plurality of cells;

determining that the first subband index for the data transmission of the first cell is equal to a preset subband index in a case that the reference subband index is beyond the subband index range of the first cell.

Alternatively, the plurality of cells have different numbers of subbands, and the FDRA field is configured to indicate:

the reference subband index.

Alternatively, the DCI includes a plurality of FDRA fields; in which the number of FDRA fields included in the DCI is equal to the number of cells in the plurality of cells;

an i-th FDRA field is configured to indicate:

a subband index for data transmission of an i-th scheduled cell among the plurality of cells, where i is a positive integer less than or equal to the number of cells.

Alternatively, a cell index of the i-th scheduled cell is less than a cell index of an (i+1)-th scheduled cell; or the cell index of the i-th scheduled cell is greater than the cell index of the (i+1)-th scheduled cell.

Alternatively, determining the bit value of the FDRA field in the DCI at least based on the frequency domain resource and the subband parameter value of one of the plurality of cells includes:

in a plurality of FDRA fields comprised in the DCI, determining a first FDRA field corresponding to the first cell; determining a bit value of the FDRA field corresponding to the first cell based on the first subband index.

Alternatively, the plurality of cells have the same number of subbands, and the FDRA field is configured to indicate:

a subband index of any one of the plurality of cells for data transmission; in which the subband index of each cell of the plurality of cells for data transmission is the same.

Alternatively, determining the frequency domain resource for the data transmission of each cell scheduled by the DCI includes:

determining a starting RB index for data transmission of a first cell; in which the first cell is any one of the plurality of cells;

determining a number of continuous RBs for the data transmission of the first cell.

Alternatively, determining the starting RB index for the data transmission of the first cell includes:

determining the starting RB index for the data transmission of the first cell based on a reference subband index of a reference cell and an offset of the starting RB index for the data transmission of the first cell relative to a starting position and/or a maximum frequency domain position of a reference subband; in which the reference cell is a cell different from the first cell among the plurality of cells.

Alternatively, determining the starting RB index for the data transmission of the first cell based on the reference subband index of the reference cell and the offset of the starting RB index for the data transmission of the first cell relative to the starting position and/ the a maximum frequency domain position of the reference subband includes:

determining that the first subband index for the data transmission of the first cell is equal to the reference subband index in a case that the reference subband index is within a subband index range of the first cell;

determining that the first subband index for the data transmission of the first cell is equal to a preset subband index in a case that the reference subband index is beyond the subband index range of the first cell;

determining the starting RB index for the data transmission of the first cell based on the starting RB index of the first subband and the offset corresponding to the first cell.

Alternatively, determining the number of continuous RBs for the data transmission of the first cell includes any of:

determining that the number of continuous RBs for the data transmission of the first cell is equal to a number of RBs included in a reference subband of the reference cell;

determining that the number of continuous RBs for the data transmission of the first cell is equal to a number of RBs included in the first subband.

Alternatively, the FDRA field is configured to indicate:

a reference subband index; in which a reference cell is a cell different from the first cell among the plurality of cells; offsets of starting RB indexes for data transmissions of other cells except the reference cell in the plurality of cells relative to a starting position and/or a maximum frequency domain position of the reference subband.

Alternatively, a granularity of an offset of the starting RB index relative to the reference subband index is any one of:

a RB;
a RBG; or
a specified subband including a specified number of RBs.

Alternatively, in the FDRA domain, a reference bit interval corresponding to the reference cell is prior to other bit intervals;

in the other bit intervals, a cell index corresponding to an m-th bit interval is less than a cell index corresponding to an (m+1)-th bit interval; or
the cell index corresponding to the m-th bit interval is greater than the cell index corresponding to the (m+1)-th bit interval; where m is a positive integer smaller than the number of cells scheduled by the DCI.

According to a third aspect of an embodiment of the present disclosure, there is provided a resource determination apparatus, applied to a terminal. The apparatus includes:

a receiving module configured to receive downlink control information (DCI) sent by a base station; in which the DCI is configured to schedule data transmission of a plurality of cells;
a first determining module, configured to determine a subband parameter value of a first cell allocated within a frequency domain resource range, in which the first cell is any one of the plurality of cells;
**a** second determining module, configured to determine a frequency domain resource for data transmission of the first cell based on an indication value of a frequency domain resource allocation (FDRA) field in the DCI and the subband parameter value of the first cell.

According to a fourth aspect of an embodiment of the present disclosure, there is provided a multi-carrier scheduling apparatus, applied to a base station. The apparatus includes:

a third determining module, configured to determine a frequency domain resource for data transmission of each cell scheduled by downlink control information (DCI); wherein the DCI is configured to schedule data transmission of a plurality of cells;
a fourth determining module, configured to determine a subband parameter value of each cell allocated within a frequency domain resource range;
a fifth determining module, configured to determine a bit value of a frequency domain resource allocation (FDRA) field in the DCI at least based on a frequency domain resource and a subband parameter value of one of the plurality of cells; and
a sending module, configured to send the DCI to a terminal.

According to a fifth aspect of an embodiment of the present disclosure, there is provided a computer-readable storage medium having a computer program stored thereon, in which the computer program is configured to execute any one of the resource determination method as described above.
According to a sixth aspect of an embodiment of the present disclosure, there is provided a computer-readable storage medium having a computer program stored thereon, in which the computer program is configured to execute any one of the multi-carrier scheduling method as described above.
According to a seventh aspect of an embodiment of the present disclosure, there is provided a resource determination apparatus. The apparatus includes:

a processor; and
a memory, configured to store instructions executable by the processor;
**in** which the processor is configured to execute any one of the resource determination method as described above.

According to an eighth aspect of an embodiment of the present disclosure, there is provided a multi-carrier scheduling apparatus. The apparatus includes:

a processor; and

a memory, configured to store instructions executable by the processor;

**in** which the processor is configured to execute any one of the multi-carrier scheduling method as described above.

The technical solution provided in an embodiment of the present may include following beneficial effects.

In an embodiment of the present disclosure, the terminal may receive the DCI sent by the base station for scheduling the data transmission of the plurality of cells, and the terminal may also determine the subband parameter value of the first cell among the plurality of cells allocated within the frequency domain resource range, and determines the frequency domain resource for the data transmission of the first cell based on the indication value of the FDRA field in the DCI and the subband parameter value of the first cell. The present disclosure may reduce a bit overhead of the DCI while ensuring scheduling flexibility of the DCI, effectively avoid the problem of reducing transmission efficiency of the DCI, and achieve high availability.

It is understandable that the foregoing general description and the following detailed descriptions are exemplary and explanatory only and do not limit the disclosure.

## BRIEF DESCRIPTION OF THE DRAWINGS

**In** order to more clearly describe the technical solutions in embodiments of the present disclosure, the following briefly introduces the accompanying drawings required for describing the embodiments. Obviously, the accompanying drawings in the following description are only embodiments of the present disclosure. Other drawings can be obtained based on these drawings, for those skilled in the art, without inventive labor.

FIG. 1 is a schematic diagram illustrating multi-cell PDSCH scheduling with a single DCI according to an example embodiment.

FIG. 2 is a flowchart illustrating a resource determination method according to an example embodiment.

FIG. 3 is a flowchart illustrating another resource determination method according to an example embodiment.

FIG. 4 is a flowchart illustrating another resource determination method according to an example embodiment.

FIG. 5 is a flowchart illustrating a multi-carrier scheduling method according to an example embodiment.

FIG. 6 is a schematic diagram illustrating a method for determining a frequency domain resource for data transmission of a cell based on an indication of a FDRA field according to an example embodiment.

FIG. 7 is a block diagram illustrating a resource determination apparatus according to an example embodiment.

FIG. 8 is a block diagram illustrating a multi-carrier scheduling apparatus according to an example embodiment.

FIG. 9 is a schematic structural diagram illustrating a resource determination apparatus according to an example embodiment of the present disclosure.

FIG. 10 is a schematic structural diagram illustrating a multi-carrier scheduling apparatus according to an example embodiment of the present disclosure.

## DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms in embodiments of the present disclosure are only for the purpose of describing specific embodiments, and are not intended to limit embodiments of the present disclosure. The singular forms of "a" and "the" in embodiments of the present disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second and third may be used in embodiments of the present disclosure to describe various information, the information should not be limited to these terms. These terms are only used to distinguish the same type of information from each other. For example, without departing from the scope of the present disclosure, the first information may also be referred to as the second information, and similarly, the second information may also be referred to as the first information. In different contexts, the term "if" used herein is interpreted as "when" or "upon" or "in response to determining".

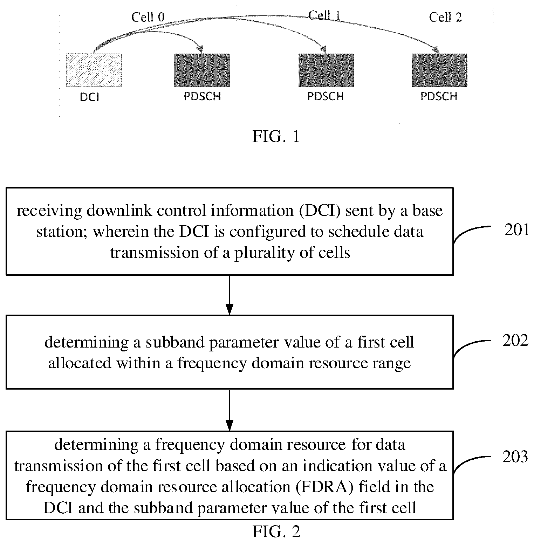

Based on relevant mechanism, one DCI in a scheduling cell is only allowed to schedule data transmission of one cell, that is, only allowed to schedule a physical uplink shared channel (PUSCH) or the physical downlink shared channel (PDSCH) of one cell. With gradual fragmentation of frequency resources, a demand to schedule data from a plurality of cells will gradually increase. In order to reduce control signaling overhead, Rel-18WID supports multi-cell PDSCH or PUSCH scheduling with a single DCI. It should be noted that each cell corresponds to one PDSCH and one PUSCH. Scheduling PDSCHs of three cells through one DCI may be shown in FIG. 1.

**In** a multi-cell data transmission scheduling with a single DCI scenario, how to reduce overhead of a DCI as much as possible while ensuring scheduling flexibility is an urgent problem to be solved. A FDRA field is configured to indicate a frequency domain resource for data transmission of a cell. It is proposed in a Rel-17 single DCI scheduling two cells scenario design that a DCI FDRA field may be simply extended, that is, frequency domain information of scheduling data of two cells is indicated based on different bits (bits).

In the Rel-18 scenario, a single DCI may schedule three or more cells simultaneously. If it is still to perform simple expansion on the FDRA field based on the above method, the number of bits occupied by the FDRA field will be significantly increased, a bit overhead of the DCI is increased. Taking three cells scheduled by a single DCI and the number of RBs occupied by a BWP configured in each cell being 100 as an example, if a FDRA field corresponding to the three cells is configured based on resource type1, the number of bits occupied by the corresponding FDRA field is 39, which is extremely increase an overhead of the DCI, and reduce a transmission resource of the DCI.

In an embodiment of the present disclosure, a FDRA resource mapping type of type 1 refers to that, a resource indication value (RIV) corresponding to the FDRA field corresponds to a starting resource block RB ($RB_{start}$) and a length of continuous RBs ($L_{RBs}$) of the frequency domain resource corresponding to transmission data.

It should be understood that the RB mentioned in the disclosure may refer to a physical resource block (PRB), a virtual resource block (VRB), or a collective name for PRB and VRB, which is not limited in the disclosure.

For type 1 downlink resource allocation other than DCI format 1_0 and DCI format 1_2 under common search space (CSS), a relationship between the RIV value indicated by the FDRA field and $RB_{start}$ and $L_{RBs}$ is shown in the following formula:

$$\text{if } (L_{RBs}-1) \leq \left\lfloor N_{BWP}^{size}/2 \right\rfloor, \text{ then } RIV = N_{BWP}^{size}(L_{RBs}-1)+RB_{start},$$

$$\text{otherwise, } RIV = N_{BWP}^{size}(N_{BWP}^{size}-L_{RBs}+1)+(N_{BWP}^{size}-1-RB_{start}),$$

where $1 \leq L_{RBs} \leq N_{BWP}^{size}-RB_{start}$, $N_{BWP}^{size}$ is a number of resource blocks (RBs) occupied by a configured BWP.

For type 1 resource allocation corresponding to DCI format 1_2, the RIV indicated by the FDRA field is associated with a starting position and a continuous resource length of a RBG. The starting position and the resource length of the RBG are expressed in terms of a granularity of resource block group (RBG). The corresponding RIV is determined based on the following formula:

$$\text{if } (L_{RBG}-1) \leq \left\lfloor N_{RBG}/2 \right\rfloor, \text{ then } RIV = N_{RBG}(L_{RBGs}-1)+RBG_{start},$$

$$\text{otherwise, } RIV = N_{RBG}(N_{RBG}-L_{RBGs}+1)+(N_{RBG}-1-RBG_{start}),$$

$$\text{where } 1 \leq L_{RBGs} \leq N_{RBG}-RBG_{start}.$$

The RBG includes a plurality of RBs. The specific number of RBs included in the RBG is related to the number of RBs included in the BWP. A specific relationship is shown in Table 1.

Table 1

| **BWP** size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

Regarding a DCI for multi-cell scheduling, simple expansion of the FDRA field will greatly increase the bit overhead of the DCI and reduce the transmission efficiency of the DCI.

In order to solve the above technical problems, the present disclosure provides a resource determination method, a multi-carrier scheduling method, an apparatus and a storage medium. The present disclosure may reduce a bit overhead of the DCI while ensuring scheduling flexibility of the DCI, effectively avoid the problem of reducing transmission efficiency of the DCI, and achieve high availability.

A resource determination method provided by the disclosure is introduced below first from a terminal side.

An embodiment of the present disclosure provides a resource determination method. Refer to FIG. 2. FIG. 2 is a flowchart illustrating a resource determination method according to an embodiment. The method may be performed by a terminal. The method may include following steps.

In step 201, downlink control information (DCI) sent by a base station is received. The DCI is configured to schedule data transmission of a plurality of cells.

In embodiments of the present disclosure, the DCI scheduling the data transmission of plurality of cells may include, but is not limited to, the DCI scheduling PDSCHs of the plurality of cells and/or PUSCHs of the plurality of cells. Each cell corresponds to one PDSCH and/or each cell corresponds to one PUSCH.

In step 202, a subband parameter value of a first cell allocated within a frequency domain resource range is determined.

In this embodiment of the present disclosure, the first cell is any one of the plurality of cells scheduled by the DCI. A frequency domain resource range of the first cell may be a frequency domain range corresponding to a configured bandwidth part (BWP) of the first cell, or a frequency domain range corresponding to a carrier where the first cell is, which is not limited in the disclosure.

In a possible implementation, the subband parameter value may be any one of: a number of subbands; or a subband granularity.

In a possible implementation, the subband parameter values of the plurality of cells may be the same or different, which is not limited in the disclosure.

In a possible implementation, the terminal may determine the subband parameter value of the first cell among the plurality of cells based on a signaling indication sent by the base station.

In another possible implementation, the terminal may determine the subband parameter value of the first cell based on a protocol agreement.

The present disclosure does not limit an execution order of step 201 and step 202, that is, step 201 may be executed first and then step 202, or step 202 may be executed first and then step 201. Of course, after the terminal detects reception of the DCI and determines the plurality of cells scheduled by the base station according to an indication of the DCI, the terminal may search for the subband parameter value of the first cell among the plurality of cells in a targeted direction, thus effectively saving terminal resources.

In step 203, a frequency domain resource for data transmission of the first cell is determined based on an indication value of a frequency domain resource allocation (FDRA) field in the DCI and the subband parameter value of the first cell.

In the above embodiment, the present disclosure may reduce a bit overhead of the DCI while ensuring scheduling flexibility of the DCI, effectively avoid the problem of reducing transmission efficiency of the DCI, and achieve high availability.

In some optional embodiments, in a case where the terminal desires to determine the subband granularity based on the signaling indication sent by the base station, if the base station fails to configure the subband granularity through signaling, the terminal may determines the subband granularity based on the number of RBs occupied by a first cell configured RBG, that is, the terminal may directly take the number of RBs occupied by the first cell configured RBG as the subband granularity.

In the above embodiment, the terminal may flexibly determine the subband granularity, which is easy to implement and has high availability.

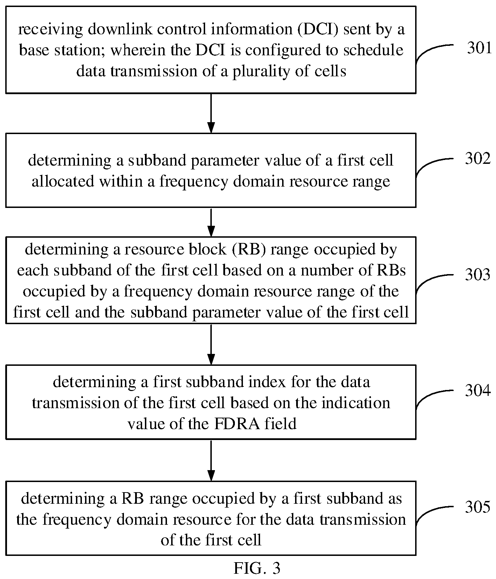

In some optional embodiments, with reference to FIG. 3, FIG. 3 is a flowchart illustrating a resource determination method according to an embodiment. The method may be performed by a terminal. The method may include following steps.

In step 301, downlink control information (DCI) sent by a base station is received. The DCI is configured to schedule data transmission of a plurality of cells.

In embodiments of the present disclosure, the DCI scheduling the data transmission of plurality of cells may include, but is not limited to, the DCI scheduling PDSCHs of the plurality of cells and/or the DCI scheduling PUSCHs of the plurality of cells. Each cell corresponds to one PDSCH and/or each cell corresponds to one PUSCH.

In step 302, a subband parameter value of a first cell allocated within a frequency domain resource range is determined.

In an embodiment of the present disclosure, the first cell is any one of the plurality of cells scheduled by the DCI.

The frequency domain resource range of the first cell may be a frequency domain range corresponding to a bandwidth part (BWP) configured for the first cell, or a frequency domain range corresponding to a carrier where the first cell is, which is not limited in the disclosure.

In a possible implementation, the subband parameter value may be any of: a number of subbands; or a subband granularity.

In a possible implementation, the subband parameter values of the plurality of cells may be the same or different, which is not limited in the disclosure.

In a possible implementation, the terminal may determine the subband parameter value of the first cell among the plurality of cells based on a signaling indication sent by the base station.

In another possible implementation, the terminal may determine the subband parameter value of the first cell based on a protocol agreement.

The present disclosure does not limit an execution order of step 301 and step 302.

In step 303, a resource block (RB) range occupied by each subband of the first cell is determined based on a number of RBs occupied by the frequency domain resource range of the first cell and the subband parameter value of the first cell.

In embodiments of the present disclosure, the subband parameter value may be the number of subbands or the subband granularity.

In step 304, a first subband index for the data transmission of the first cell is determined based on the indication value of the FDRA field.

In step 305, a RB range occupied by a first subband is determined as the frequency domain resource for the data transmission of the first cell.

In the above embodiment, the terminal may determine the RB range occupied by each subband of the first cell based on the number of RBs occupied by the frequency domain resource range of the first cell and the subband parameter value of the first cell, and determine the first subband index for the data transmission of the first cell based on the indication value of the FDRA field, and then determine the RB range occupied by the first subband as the frequency domain resource for the data transmission of the first cell. The present disclosure may reduce a bit overhead of the DCI while ensuring scheduling flexibility of the DCI, effectively avoid the problem of reducing transmission efficiency of the DCI, and achieve high availability.

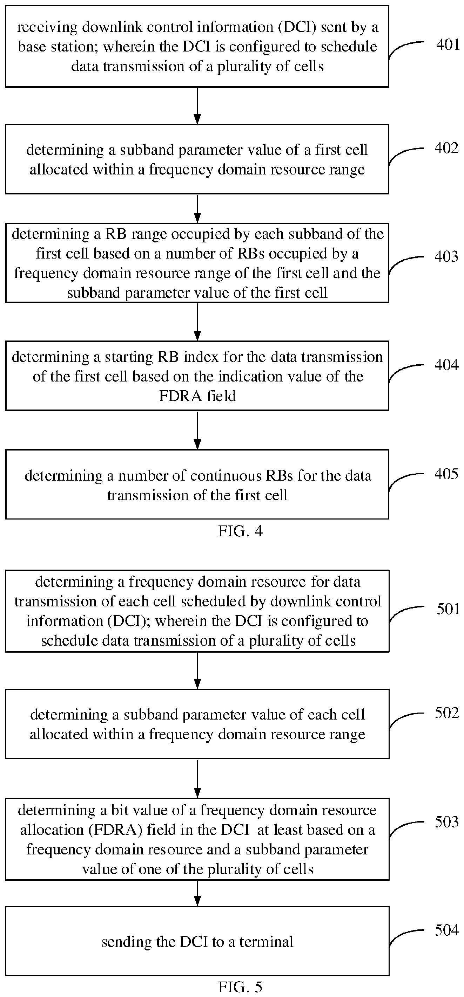

In some optional embodiments, with reference to FIG. 4, FIG. 4 is a flowchart illustrating a resource determination method according to an embodiment. The method may be performed by a terminal. The method may include following steps.

In step 401, downlink control information (DCI) sent by a base station is received. The DCI is configured to schedule data transmission of a plurality of cells.

In embodiments of the present disclosure, the DCI scheduling the data transmission of plurality of cells may include, but is not limited to, the DCI scheduling PDSCHs of the plurality of cells and/or the DCI scheduling PUSCHs of the plurality of cells. Each cell corresponds to one PDSCH and/or each cell corresponds to one PUSCH.

In step 402, a subband parameter value of a first cell allocated within a frequency domain resource range is determined.

In an embodiment of the present disclosure, the first cell is any one of the plurality of cells scheduled by the DCI. The frequency domain resource range of the first cell may be a frequency domain range corresponding to a configured bandwidth part (BWP) of the first cell, or a frequency domain range corresponding to a carrier where the first cell is, which is not limited in the disclosure.

In a possible implementation, the subband parameter value may be any one of: a number of subbands; or a subband granularity.

In a possible implementation, the subband parameter values of the plurality of cells may be the same or different, which is not limited in the disclosure.

In a possible implementation, the terminal may determine the subband parameter value of the first cell among the plurality of cells based on a signaling indication sent by the base station.

In another possible implementation, the terminal may determine the subband parameter value of the first cell based on a protocol agreement.

For example, the protocol agreement is that a subband parameter value configured for a scheduled cell i is $N_i$. The terminal determines that the first cell belongs to the scheduled cell i, and then may determine the subband parameter value to be as $N_i$ based on the protocol agreement.

In another possible implementation, the terminal may determine the subband parameter value of the first cell based on both the protocol agreement and the signaling indication sent by the base station.

For example, a value set of subband parameter values is predefined by the protocol agreement or a signaling sent by the base station, and then it may indicate through that the subband parameter value of the first cell is one value in the value set. It should be noted that in a case that the subband parameter values of the plurality of cells are different, the base station may indicate a plurality of values in the value set for the plurality of cells through the DCI.

The present disclosure does not limit an execution order of step 401 and step 402.

In step 403, a RB range occupied by each subband of the first cell is determined based on a number of RBs occupied by a frequency domain resource range of the first cell and the subband parameter value of the first cell.

In step 404, a starting RB index for the data transmission of the first cell is determined based on the indication value of the FDRA field.

In an embodiment of the present disclosure, the FDRA field may be configured to indicate: a reference subband index for data transmission of a reference cell, in which, the reference cell is a cell among the plurality of cells different from the first cell; offsets of starting RB indexes for data transmissions of other cells except the reference cell in the plurality of cells relative to a starting position and/or a maximum frequency domain position of the reference subband.

The terminal may determine an offset corresponding to the first cell based on bit values in a first bit interval corresponding to the first cell in the FDRA field, and determine the starting RB index for the data transmission of the first cell based on the reference subband index and the offset corresponding to the first cell. The specific implementation may be introduced in subsequent embodiments and not be introduced here.

In step 405, a number of continuous RBs for the data transmission of the first cell is determined.

In an embodiment of the present disclosure, the number of continuous RBs for the data transmission of the first cell may be determined based on a number of RBs included in a reference subband of the reference cell, or may be determined based on a number of RBs included in a first subband for the data transmission of the first cell. The specific implementation may be introduced in subsequent embodiments and not be introduced here.

In an embodiment of the present disclosure, the frequency domain resource for the data transmission of the first cell includes an RB range starting from a starting RB and having a length of the number of continuous RBs.

In the above embodiment, the terminal may determine the starting RB index for the data transmission of the first cell based on the indication value of the FDRA field. Furthermore, the terminal may determine the number of continuous RBs for the data transmission of the first cell at least based on the subband parameter value of the first cell, so as to determine the frequency domain resource for the data transmission of the first cell. The present disclosure may reduce a bit overhead of the DCI while ensuring scheduling flexibility of the DCI, effectively avoid the problem of reducing transmission efficiency of the DCI, and achieve high availability.

The solution provided by the present disclosure is further described below for different subband parameter values.

In some optional embodiments, the subband parameter value is the number $N_i$ of subbands, and the FDRA field may be indicated in following manners.

A first manner is a shared instruction manner.

In a possible implementation, the FDRA field may be configured to indicate:

a reference subband index for data transmission of a reference cell; in which, the reference cell is a cell among the plurality of cells different from the first cell.

In an embodiment of the present disclosure, the reference cell may be indicated by the base station through signaling, or the reference cell may be determined by the protocol agreement.

In a possible implementation, a cell that receives the DCI among the plurality of cells may be determined as the reference cell.

In another possible implementation, a cell with a maximum number of RBs occupied by a configured BWP among the plurality of cells may be determined as the reference cell.

In another possible implementation, a cell with a minimum number of RBs occupied by a configured BWP among the plurality of cells may be determined as the reference cell.

In another possible implementation, a cell corresponding to a maximum cell index number among the plurality of cells may be determined as the reference cell.

In another possible implementation, a cell corresponding to a minimum cell index number among the plurality of cells may be determined as the reference cell.

The above is only illustration of examples, and any method for determining the reference cell among the plurality of cells in actual applications should fall within the scope of the present disclosure.

In an embodiment of the present disclosure, the terminal determines the frequency domain resource of the first cell based on the method shown in FIG. 3.

For step 303, the subband parameter value is the number $N_i$ of subbands, and the RB ranges occupied by respective subbands are: $\{0, \lfloor N_{RB,i}/N_i \rfloor - 1\}, \ldots, \{\lfloor N_{RB,i}(N_i - 1)/N_i \rfloor, N_{RB,i} - 1\}$ , where $N_{RB,i}$ refers to the number of RBs occupied by the frequency domain resource range of the first cell.

Correspondingly, step 304 may include following steps.

First, the reference subband index is determined based on a bit value of the FDRA field.

In an embodiment of the present disclosure, the bit value of the FDRA field is a reference subband index.

Secondly, it is determined that the first subband index for the data transmission of the first cell is equal to the reference subband index in a case that the reference subband index is within a subband index range of the first cell.

In an embodiment of the present disclosure, if the reference subband index is in a range of $[0, (N_i-1)]$, for example, the reference subband index is less than $N_i$, the first subband index is equal to the reference subband index indicated by the FDRA field.

In addition, it is determined that the first subband index for the data transmission of the first cell is equal to a preset subband index in a case that the reference subband index is beyond the subband index range of the first cell.

In an embodiment of the present disclosure, if the reference subband index is beyond the range of $[0, (N_i-1)]$, for example, the reference subband index is greater than or equal to $N_i$, the first subband index may be the preset subband index. Optionally, the preset subband value may be $N_i -1$, that is, the number of subbands minus 1.

In another possible implementation, the plurality of cells have the same number of subbands, and the FDRA field may be configured to indicate:

a subband index of any one of the plurality of cells for data transmission; in which the subband index of each cell of the plurality of cells for data transmission is the same.

At this case, the number of subbands of the first cell is $N_i =N$, then the terminal may determine that number of subbands of each cell in the plurality of cells is N. The value of N may be determined by a protocol agreement or by a signaling indication sent by the base station, which is not limited in the disclosure. Correspondingly, the subband index of each cell in the plurality of cells for data transmission may be the same. The FDRA field may indicate the subband index of any cell among the plurality of cells.

The terminal also determines the frequency domain resource corresponding to the first cell according to the method shown in FIG. 3.

For step 303, the subband parameter value is the number $N_i$ of subbands, and the RB ranges occupied by

respective subbands are: $\{0, \lfloor N_{RB,i}/N_i \rfloor - 1\}, \ldots, \{\lfloor N_{RB,i} (N_i - 1)/N_i \rfloor, N_{RB,i} - 1\}$, where $N_{RB,i}$ refers to the number of RBs occupied by the frequency domain resource range of the first cell.

Correspondingly, step 304 may specifically include:

directly determining the first subband for the data transmission of the first cell based on the indication value of the FDRA field.

In another possible implementation, the FDRA field may be configured to indicate:

a reference subband index for data transmission of a reference cell;
offsets of starting RB indexes for data transmissions of other cells except the reference cell in the plurality of cells relative to a starting position and/or a maximum frequency domain position of the reference subband.

The method for determining the reference cell is similar to the method for determining the reference cell provided in the above embodiment, and will not be described again here.

Optionally, a granularity of the offset is any one of: a RB; a RBG; or a specified subband including a specified number of RBs.

The specified number of RBs may be the number of RBs included in a subband of the first cell, or other preset number of RBs. The preset number of RBs may be 6.

At this case, the terminal may determine the frequency domain resource corresponding to the first cell according to the method shown in FIG. 4.

For step 403, the subband parameter value is the number $N_i$ of subbands, and the RB ranges occupied by

respective subbands are: $\{0, \lfloor N_{RB,i}/N_i \rfloor - 1\}, \ldots, \{\lfloor N_{RB,i} (N_i - 1)/N_i \rfloor, N_{RB,i} - 1\}$, where $N_{RB,i}$ refers to the number of RBs occupied by the frequency domain resource range of the first cell.

Correspondingly, step 404 may include following steps.

The terminal determines an offset of starting RB index for the data transmission of the first cell relative to the reference subband index based on bit values in a first bit interval corresponding to the first cell in the FDRA field.

Further, the terminal determines the starting RB index for the data transmission of the first cell based on the reference subband index indicated by the FDRA field and the offset corresponding to the first cell.

In the FDRA domain of the DCI, a reference bit interval corresponding to the reference cell is prior to other bit intervals. In the other bit intervals, a cell index corresponding to an m-th bit interval is less than a cell index corresponding to an (m+1)-th bit interval.

For example, the plurality of cells scheduled by the DCI are cell#1, cell#2, and cell#4, the reference cell is cell#2, and a reference bit interval corresponding to cell#2 is prior to other two bit intervals. A bit interval corresponding to cell#1 is prior to a bit interval corresponding to cell#4. That is, bit intervals from left to right in the DCI are the reference bit interval corresponding to cell #2, the bit interval corresponding to cell #1, and the bit interval corresponding to cell #4.

Alternatively, in the FDRA domain of the DCI, the reference bit interval corresponding to the reference cell is prior to other bit intervals. In other bit intervals, the cell index corresponding to the m-th bit interval is greater than the cell index corresponding to the (m+1)-th bit interval; where m is a positive integer smaller than the number of cells scheduled by the DCI.

In an embodiment of the present disclosure, in a case that the reference subband index is within the subband index range of the first cell, for example, the reference subband index is less than $N_i$, it is determined that the first subband index for the data transmission of the first cell is equal to the reference subband index. In a case that the reference subband index is beyond the subband index range of the first cell, for example, the reference subband index is greater than or equal to $N_i$, it is determined that the first subband index for the data transmission of the first cell is equal to the preset subband index. The preset subband index may be $N_i$ -1.

Further, a sum value of the starting RB index in the first subband and the number of RBs occupied by the offset corresponding to the first cell is determined, and a remainder between the obtained sum value and the number $N_{RB,i}$ of RBs occupied by the frequency domain resource range of the first cell is determined. The remainder is determined as the starting RB index for the data transmission of the first cell.

Step 405 may specifically include any one of:

determining that the first subband index for the data transmission of the first cell is equal to the reference subband index in a case that the reference subband index is within a subband index range of the first cell; or

determining that the first subband index for the data transmission of the first cell is equal to a preset subband index in a case that the reference subband index is beyond the subband index range of the first cell; in which determining the number of continuous RBs for the data transmission of the first cell includes: determining that the number of continuous RBs for the data transmission of the first cell is equal to a number of RBs included in the first subband.

The number of continuous RBs for the data transmission of the first cell is equal to the number of RBs included in the reference subband of the reference cell, in which the reference subband has the same subband index as the first subband for the data transmission of the first cell. Alternatively, the terminal may determine that the number of continuous RBs for the data transmission of the first cell is equal to the number of RBs included in the first subband.

In the above embodiment, the FDRA field adopts the shared indication manner. The terminal may determine the frequency domain resource for the data transmission of the first cell based on the number of subbands of the first cell and the indication value of the FDRA field. The present disclosure may reduce a bit overhead of the DCI while ensuring scheduling flexibility of the DCI, effectively avoid the problem of reducing transmission efficiency of the DCI, and achieve high availability.

A second manner is a separate indication manner.

In a possible implementation, the DCI includes a plurality of FDRA fields. The number of FDRA fields included in the DCI is equal to the number of cells in the plurality of cells;

in which, an i-th FDRA field is configured to indicate:

a subband index for data transmission of an i-th scheduled cell among the plurality of cells, where i is a positive integer less than or equal to the number of cells.

The cell index of the i-th scheduled cell is less than a cell index of an (i+1)-th scheduled cell. For example, three cells scheduled by DCI are cell#1, cell#2, and cell#4, respectively. Then cell#1 corresponds to a first FDRA field, cell#2 corresponds to a second FDRA field, and cell#4 corresponds to a third FDRA field.

Alternatively, the cell index of the i-th scheduled cell is greater than the cell index of the (i+1)-th scheduled cell. For example, three cells scheduled by DCI are cell#1, cell#2, and cell#4, respectively. Then cell#4 corresponds to the first FDRA field, cell#2 corresponds to the second FDRA field, and cell#1 corresponds to the third FDRA field.

At this case, the terminal may determine the frequency domain resource of the first cell based on the method shown in FIG. 3.

For step 303, the subband parameter value is the number $N_i$ of subbands, and the RB ranges occupied by respective subbands are: $\{0, \lfloor N_{RB,i}/N_i \rfloor - 1\}, \ldots, \{\lfloor N_{RB,i} (N_i - 1)/N_i \rfloor, N_{RB,i} - 1\}$, where $N_{RB,i}$ refers to the number of RBs occupied by the frequency domain resource range of the first cell.

Correspondingly, step 304 may include following steps.

First, in a plurality of FDRA fields included in the DCI is determined, a first FDRA field corresponding to the first cell is determined.

Secondly, the first subband index for the data transmission of the first cell is determined based on a bit value of the first FDRA field.

In an embodiment of the present disclosure, the first FDRA field is configured to indicate the first subband index. The terminal may quickly determine the first subband index according to the bit value of the first FDRA field.

At this case, the terminal determines that the frequency domain resource for the data transmission of the first cell is the RB range occupied by the first subband.

In the above embodiment, the FDRA domain adopts the separate indication manner. The terminal determines the frequency domain resource for the data transmission of the first cell based on the number of subbands of the first cell and the indication value of the first FDRA field corresponding to the first cell. The present disclosure may reduce a bit overhead of the DCI while ensuring scheduling flexibility of the DCI, effectively avoid the problem of reducing transmission efficiency of the DCI, and achieve high availability.

In some optional embodiments, the subband parameter value is a subband granularity $M_i$, and the subband granularity may refer to as the number of RBs included in one subband.

The FDRA field may be indicated by following manners.

In a possible implementation, the FDRA field may be configured to indicate:

a reference subband index for data transmission of a reference cell; in which, the reference cell is a cell among the plurality of cells different from the first cell.

In an embodiment of the present disclosure, the reference cell may be indicated by the base station through signaling, or the reference cell may be determined by the protocol agreement.

In a possible implementation, a cell that receives the DCI among the plurality of cells may be determined as the reference cell.

In another possible implementation, a cell with a maximum number of RBs occupied by a configured BWP among the plurality of cells may be determined as the reference cell.

In another possible implementation, a cell with a minimum number of RBs occupied by a configured BWP among the plurality of cells may be determined as the reference cell.

In another possible implementation, a cell corresponding to a maximum cell index number among the plurality of cells may be determined as the reference cell.

In another possible implementation, a cell corresponding to a minimum cell index number among the plurality of cells may be determined as the reference cell.

The above is only illustration of examples, and any method for determining the reference cell among the plurality of cells in actual applications should fall within the scope of the present disclosure.

In an embodiment of the present disclosure, the terminal determines the frequency domain resource of the first cell based on the method shown in FIG. 3.

For step 303, the subband parameter value is the subband granularity $M_i$, and the RB range occupied by each subband may be determined in the following manner.

The number $N_i$ of subbands is determined based on the subband granularity $M_i$ and the number $N_{RB,i}$ of resource blocks (RBs) occupied by the terminal within the frequency domain resource range of the first cell, that is,

$$N_i = \left\lceil \left( N_{RB,i} + \left( N_{RB,i}^{start} \bmod M_i \right) \right) / M_i \right\rceil.$$

Further, the number of RBs occupied by the first subband is $sBAND_0^{size} = M_i - N_{RB,i}^{start} \bmod M_i$.

If $\left( N_{RB,i}^{start} + N_{RB,i} \right) \bmod M_i > 0$, then the number of RBs occupied by the last subband is:

$$sBAND_{last}^{size} = \left( N_{RB,i}^{start} + N_{RB,i} \right) \bmod M_i,$$

otherwise, the number of RBs occupied by the last subband is equal to $M_i$;
the numbers of RBs occupied by other subbands are equal to $M_i$.

Correspondingly, step 304 may include following steps.

First, the reference subband index is determined based on a bit value of the FDRA field.

In an embodiment of the present disclosure, the bit value of the FDRA field is a reference subband index.

Secondly, it is determined that the first subband index for the data transmission of the first cell is equal to the reference subband index in a case that the reference subband index is within a subband index range of the first cell.

In an embodiment of the present disclosure, if the reference subband index is in a range of $[0, (N_i-1)]$, for example, the reference subband index is less than $N_i$, the first subband index is equal to the reference subband index indicated by the FDRA field.

In addition, it is determined that the first subband index for the data transmission of the first cell is equal to a preset subband index in a case that the reference subband index is beyond the subband index range of the first cell, for example, the reference subband index is greater than or equal to N.

In an embodiment of the present disclosure, if the reference subband index is beyond the range of $[0, (N_i - 1)]$, for example, the reference subband index is greater than or equal to $N_i$, the first subband index may be the preset subband index. Optionally, the preset subband value may be $N_i - 1$, that is, the number of subbands minus 1.

In another possible implementation, the plurality of cells have the same number of subbands, and the FDRA field may be configured to indicate:

a subband index of any one of the plurality of cells for data transmission; in which the subband index of each cell of the plurality of cells for data transmission is the same.

At this case, the number of subbands of the first cell is $N_i = N$, then the terminal may determine that number of subbands of each cell in the plurality of cells is N. The value of N may be determined by a protocol agreement or by a signaling indication sent by the base station, which is not limited in the disclosure. Correspondingly, the subband index of each cell in the plurality of cells for data transmission may be the same. The FDRA field may indicate the subband index of any cell among the plurality of cells.

The terminal also determines the frequency domain resource corresponding to the first cell according to the method shown in FIG. 3.

For step 303, the subband parameter value is the subband granularity $M_i$, and the number $N_i$ of subbands is
$$N_i = \left\lceil \left( N_{RB,i} + \left( N_{RB,i}^{start} \bmod M_i \right) \right) / M_i \right\rceil.$$

Further, the number of RBs occupied by the first subband is $sBAND_0^{size} = M_i - N_{RB,i}^{start} \bmod M_i$.

If $\left( N_{RB,i}^{start} + N_{RB,i} \right) \bmod M_i > 0$, then the number of RBs occupied by the last subband is:

$$sBAND_{last}^{size} = \left( N_{RB,i}^{start} + N_{RB,i} \right) \bmod M_i,$$

otherwise, the number of RBs occupied by the last subband is equal to $M_i$;
the numbers of RBs occupied by other subbands are equal to $M_i$.

Correspondingly, step 304 may specifically include:

directly determining the first subband for the data transmission of the first cell based on the indication value of the FDRA field.

In another possible implementation, the FDRA field may be configured to indicate:

a reference subband index for data transmission of a reference cell;
offsets of starting RB indexes for data transmissions of other cells except the reference cell in the plurality of cells relative to a starting position and/or a maximum frequency domain position of the reference subband.

The method for determining the reference cell is similar to the method for determining the reference cell provided in the above embodiment, and will not be described again here.

Optionally, a granularity of the offset is any one of: a RB; a RBG; or a specified subband including a specified number of RBs.

The specified number of RBs may be the number of RBs included in a subband of the first cell, or other preset number of RBs. The preset number of RBs may be 6.

At this case, the terminal may determine the frequency domain resource corresponding to the first cell according to the method shown in FIG. 4.

For step 403, the subband parameter value is the subband granularity $M_i$, and the number $N_i$ of subbands is
$$N_i = \left\lceil \left( N_{RB,i} + \left( N_{RB,i}^{start} \bmod M_i \right) \right) / M_i \right\rceil.$$

Further, the number of RBs occupied by the first subband is $sBAND_0^{size} = M_i - N_{RB,i}^{start} \bmod M_i$.

If $\left( N_{RB,i}^{start} + N_{RB,i} \right) \bmod M_i > 0$, then the number of RBs occupied by the last subband is:

$$sBAND_{last}^{size} = \left( N_{RB,i}^{start} + N_{RB,i} \right) \bmod M_i,$$

otherwise, the number of RBs occupied by the last subband is equal to $M_i$;
the numbers of RBs occupied by other subbands are equal to $M_i$.

Correspondingly, step 404 may include following steps.

The terminal determines an offset of starting RB index for the data transmission of the first cell relative to the reference subband index based on bit values in a first bit interval corresponding to the first cell in the FDRA field.

Further, the terminal determines the starting RB index for the data transmission of the first cell based on the reference subband index indicated by the FDRA field and the offset corresponding to the first cell.

In the FDRA domain of the DCI, a reference bit interval corresponding to the reference cell is prior to other bit intervals. In the other bit intervals, a cell index corresponding to an m-th bit interval is less than a cell index corresponding to an (m+1)-th bit interval.

Alternatively, in the FDRA domain of the DCI, the reference bit interval corresponding to the reference cell is prior to other bit intervals. In other bit intervals, the cell index corresponding to the m-th bit interval is greater than the cell index corresponding to the (m+1)-th bit interval; where m is a positive integer smaller than the number of cells scheduled by the DCI.

In an embodiment of the present disclosure, in a case that the reference subband index is within the subband index range of the first cell, for example, the reference subband index is less than $N_i$, it is determined that the first subband index for the data transmission of the first cell is equal to the reference subband index. In a case that the reference subband index is beyond the subband index range of the first cell, for example, the reference subband index is greater than or equal to $N_i$, it is determined that the first subband index for the data transmission of the first cell is equal to the preset subband index. The preset subband index may be $N_i$ -1.

Further, a sum value of the starting RB index in the first subband and the number of RBs occupied by the offset corresponding to the first cell is determined, and a remainder between the obtained sum value and the number $N_{RB,i}$ of RBs occupied by the frequency domain resource range of the first cell is determined. The remainder is determined as the starting RB index for the data transmission of the first cell.

Step 405 may specifically include any one of:

determining that the number of continuous RBs for the data transmission of the first cell is equal to the number of RBs included in the reference subband of the reference cell; in which the reference subband has the same subband index as a subband where the data transmission of the first cell is; or
determining that the number of continuous RBs for the data transmission of the first cell is equal to the number of RBs included in the first subband.

The number of continuous RBs for the data transmission of the first cell is equal to the number of RBs included in the reference subband of the reference cell, in which the reference subband has the same subband index as the first subband for the data transmission of the first cell. Alternatively, the terminal may determine that the number of continuous RBs for the data transmission of the first cell is equal to the number of RBs included in the first subband.

In the above embodiment, the FDRA field adopts the shared indication manner. The terminal may determine the frequency domain resource for the data transmission of the first cell based on the number of subbands of the first cell and the indication value of the FDRA field. The present disclosure may reduce a bit overhead of the DCI while ensuring scheduling flexibility of the DCI, effectively avoid the problem of reducing transmission efficiency of the DCI, and achieve high availability.

A second manner is a separate indication manner.

In a possible implementation, the DCI includes a plurality of FDRA fields. The number of FDRA fields included in the DCI is equal to the number of cells in the plurality of cells;
in which, an i-th FDRA field is configured to indicate:
a subband index for data transmission of an i-th scheduled cell among the plurality of cells, where i is a positive integer less than or equal to the number of cells.

At this case, the terminal may determine the frequency domain resource of the first cell based on the method shown in FIG. 3.

For step 303, the subband parameter value is the subband granularity $M_i$, and

$$N_i = \left\lceil \left( N_{RB,i} + \left( N_{RB,i}^{start} \bmod M_i \right) \right) / M_i \right\rceil$$

**the** number $N_i$ of subbands is .

Further, the number of RBs occupied by the first subband is $sBAND_0^{size} = M_i - N_{RB,i}^{start} \bmod M_i$ .

If $\left( N_{RB,i}^{start} + N_{RB,i} \right) \bmod M_i > 0$ , then the number of RBs occupied by the last subband is:

$$\text{sBAND}_{\text{last}}^{\text{size}} = \left(\text{N}_{\text{RB,i}}^{\text{start}} + \text{N}_{\text{RB,i}}\right) \text{mod } \text{M}_{\text{i}},$$

otherwise, the number of RBs occupied by the last subband is equal to $M_i$;

the numbers of RBs occupied by other subbands are equal to $M_i$.

Correspondingly, step 304 may include following steps.

First, in a plurality of FDRA fields included in the DCI is determined, a first FDRA field corresponding to the first cell is determined.

Secondly, the first subband index for the data transmission of the first cell is determined based on a bit value of the first FDRA field.

In an embodiment of the present disclosure, the first FDRA field is configured to indicate the first subband index. The terminal may quickly determine the first subband index according to the bit value of the first FDRA field.

At this case, the terminal determines that the frequency domain resource for the data transmission of the first cell is the RB range occupied by the first subband.

In the above embodiment, the FDRA domain adopts the separate indication manner. The terminal determines the frequency domain resource for the data transmission of the first cell based on the number of subbands of the first cell and the indication value of the first FDRA field corresponding to the first cell. The present disclosure may reduce a bit overhead of the DCI while ensuring scheduling flexibility of the DCI, effectively avoid the problem of reducing transmission efficiency of the DCI, and achieve high availability.

In addition to the above method, in an embodiment of the present disclosure, the DCI used to schedule the data transmission of the plurality of cells is configured with that a resource type is a resource allocation manner of type 1 taken RBG as the granularity, then an RIV indicated by the FDRA field is associated to an starting position of RBGs and the number of continuous RBGs.

In addition, based on the number of cells scheduled by the DCI, it may be determined whether to take RB as the granularity or RBG as the granularity in a case where the resource allocation manner is type 1. The number of cells may be determined based on a signaling indication or a protocol agreement, which is not limited in the disclosure.

In a possible implementation, if the DCI schedules data of one cell, the RIV indicates that the resource granularity is taken RB as the granularity. If the number of cells scheduled by the DCI is greater than 1, the RIV indicates that the resource granularity is taken RBG granularity.

Alternatively, it may be determined to use RB as the granularity or RBG as the granularity based on an indication of the FDRA field in the DCI.

In a possible implementation, a first bits and/or a second bit in the FDRA field of the DCI may be used to indicate that the resource type is one of RB or RBG as the granularity.

For example, if the first bit of the FDRA field is not occupied, that is, in a case where the resource allocation manner is type1, the first bit of the FDRA field of the DCI may be configured to indicate that the resource type is either RB or RBG as the granularity.

For another example, the first bit of the FDRA field is occupied, that is, in a case where the resource allocation manner is dynamic, the first bit of the FDRA field is configured to indicate that the resource allocation type is dynamic+type1 or dynamic+type0, where dynamic refers to as a manner the resource allocation type is dynamically switched between type0 and type1, dynamic+type1 refers to that, the base station indicates that the resource allocation type is type1 through the FDRA field after pre-indicating that the resource allocation type is dynamic through RRC signaling, dynamic+type0 refers to that, the base station indicates that the resource allocation type is type0 through the FDRA field after pre-indicating that the resource allocation type is dynamic through RRC signaling. Type 0 refers to indicating the data transmission resource of the cell through a bitmap, and type 1 refers to indicating the data transmission resource of the cell through the RIV

In the disclosure, the first bit is specifically configured to indicate that the resource allocation type is dynamic+type1. At this case, the second bit in the FDRA field of DCI may be configured to indicate that the resource type is either RB or RBG as the granularity.

In the above embodiment, the resource granularity during multi-carrier scheduling may be flexibly determined, which is simple to implement and has high availability.

Next, a multi-carrier scheduling method provided by the present disclosure may be introduced from a base station side.

Embodiments of the present disclosure provide a multi-carrier scheduling method. With reference to FIG. 5, FIG. 5 is a flowchart illustrating a multi-carrier scheduling method according to an embodiment. The method may be performed by a base station, and include following steps:

In step 501, a frequency domain resource for data transmission of each cell scheduled by downlink control information (DCI) is determined. The DCI is configured to schedule data transmission of a plurality of cells.

In embodiments of the present disclosure, the DCI scheduling the data transmission of plurality of cells may include, but is not limited to, the DCI scheduling PDSCHs of the plurality of cells and/or the DCI scheduling PUSCHs of the plurality of cells. Each cell corresponds to one PDSCH and/or each cell corresponds to one PUSCH.

In step 502, a subband parameter value of each cell allocated within a frequency domain resource range is determined.

In this embodiment of the present disclosure, the frequency domain resource range of each cell may be a frequency domain range corresponding to a bandwidth part (BWP) of the cell, or a frequency domain range corresponding to a carrier where the cell is, which is not limited in the disclosure.

In a possible implementation, the subband parameter value may be any one of: a number of subbands; or a subband granularity.

In a possible implementation, the subband parameter values of the plurality of cells may be the same or different, which is not limited in the disclosure.

In a possible implementation, the base station may send to the terminal signaling indicating the subband parameter value of each cell.

In another possible implementation, the base station may determine the subband parameter value of each cell based on a protocol agreement.

In step 503, a bit value of a frequency domain resource allocation (FDRA) field in the DCI is determined at least based on a frequency domain resource and a subband parameter value of one of the plurality of cell.

In step 504, the DCI is sent to a terminal.

In the above embodiment, the present disclosure may reduce a bit overhead of the DCI while ensuring scheduling flexibility of the DCI, effectively avoid the problem of reducing transmission efficiency of the DCI, and achieve high availability.

The solution provided by the present disclosure is further described below for different subband parameter values.

In some optional embodiments, the subband parameter value is the number $N_i$ of subbands, and the FDRA field may be indicated in following manners.

A first manner is a shared instruction manner.

In a possible implementation, the FDRA field may be configured to indicate: a reference subband index for data transmission of a reference cell; in which, the reference cell is a cell among the plurality of cells different from the first cell.

In an embodiment of the present disclosure, the reference cell may be indicated by the base station through signaling, or the reference cell may be determined by the protocol agreement.

In a possible implementation, a cell that receives the DCI among the plurality of cells may be determined as the reference cell.

In another possible implementation, a cell with a maximum number of RBs occupied by a configured BWP among the plurality of cells may be determined as the reference cell.

In another possible implementation, a cell with a minimum number of RBs occupied by a configured BWP among the plurality of cells may be determined as the reference cell.

In another possible implementation, a cell corresponding to a maximum cell index number among the plurality of cells may be determined as the reference cell.

In another possible implementation, a cell corresponding to a minimum cell index number among the plurality of cells may be determined as the reference cell.

The above is only illustration of examples, and any method for determining the reference cell among the plurality of cells in actual applications should fall within the scope of the present disclosure.

For the base station, it may first determine the RB range occupied by each subband of the first cell among the plurality of cells.

The subband parameter value is the number $N_i$ of subbands, and the RB ranges occupied by respective subbands are: $\{0, \ \lfloor N_{RB,i}/N_i \rfloor - 1\}, \ \ldots, \ \{\lfloor N_{RB,i}(N_i-1)/N_i \rfloor, N_{RB,i} - 1\}$, where $N_{RB,i}$ refers to the number of RBs occupied by the frequency domain resource range of the first cell.

Further, the base station may determine the first subband index for data transmission of the first cell based on the reference subband value of the reference cell. Specifically, in a case that the reference subband index is in a range of $[0, (N_i -1)]$, the first subband index is equal to the reference subband index indicated by the FDRA field. In a case that the reference subband index is beyond the subband index range of the first cell, it is determined that the first subband index for the data transmission of the first cell is equal to a preset subband index.

The base station determines that the frequency domain resource for the data transmission of the first cell is the RB range occupied by the first subband.

After determining the frequency domain resources for the data transmission of other cells based on the reference cell, the base station may determine the bit value of the FDRA domain based on the reference subband value. Further, the base station sends the DCI to the terminal, rendering that the terminal determines the frequency domain resource for the data transmission of each of the plurality of cells scheduled by the DCI.

**In** another possible implementation, in a case that the plurality of cells have the same number of subbands, the FDRA domain may be configured to indicate:

a subband index of any one of the plurality of cells for data transmission; in which the subband index of each cell of the plurality of cells for data transmission is the same.

At this case, the number of subbands of the first cell is $N_i = N$, then number of subbands of each cell in the plurality of cells is N. The value of N may be determined by a protocol agreement or by a signaling indication sent by the base station, which is not limited in this disclosure.

Correspondingly, the subband index of each cell in the plurality of cells for data transmission may be the same. The FDRA field may indicate the subband index of any cell among the plurality of cells. That is, after determining the subband index of any cell among the plurality of cells for the data transmission, the base station may determine the bit value of the FDRA domain based on the subband index, then send the DCI to the terminal, rendering the terminal to determine the frequency domain resource for the data transmission of each of the plurality of cells scheduled by the DCI.

In another possible implementation, the FDRA field may be configured to indicate:

a reference subband index for data transmission of a reference cell;

offsets of starting RB indexes for data transmissions of other cells except the reference cell in the plurality of cells relative to a starting position and/or a maximum frequency domain position of the reference subband.

The method for determining the reference cell is similar to the method for determining the reference cell provided in the above embodiment, and will not be described again here.

Optionally, a granularity of the offset is any of: a RB; a RBG; or a specified subband including a specified number of RBs.

The specified number of RBs may be the number of RBs included in a subband of the first cell, or other preset number of RBs. The preset number of RBs may be 6.

The base station may determine the bit value of the reference bit interval in the FDRA domain based on the reference subband value of the reference cell. In addition, the base station may determine the bit value of the first bit interval corresponding to the first cell based on the offset corresponding to the first cell.

In the FDRA domain of the DCI, a reference bit interval corresponding to the reference cell may be prior to other bit intervals. In the other bit intervals, a cell index corresponding to an m-th bit interval is less than a cell index corresponding to an (m+1)-th bit interval.

Alternatively, in the FDRA domain of the DCI, the reference bit interval corresponding to the reference cell may be prior to other bit intervals. In the other bit intervals, the cell index corresponding to the m-th bit interval is greater than the cell index corresponding to the (m+1)-th bit interval; where m is a positive integer smaller than the number of cells scheduled by the DCI.

The base station determines the starting RB index and the number of continuous RBs of the first cell in a manner similar to that on the terminal side, which will not be described again here.

**A** second manner is a separate indication manner.

In a possible implementation, the DCI includes a plurality of FDRA fields. The number of FDRA fields included in the DCI is equal to the number of cells in the plurality of cells;

in which, an i-th FDRA field is configured to indicate:

a subband index for data transmission of an i-th scheduled cell among the plurality of cells, where i is a positive integer less than or equal to the number of cells.

The cell index of the i-th scheduled cell is less than the cell index of the (i+1)-th scheduled cell. Or, the cell index of the i-th scheduled cell is greater than the cell index of the (i+1)-th scheduled cell.

After determining the first subband index, the base station may determine the bit value of the first FDRA domain corresponding to the first cell based on the first subband index.

For the base station side, the method of determining the bit value of the FDRA domain in a case where the subband parameter value is the subband granularity $M_i$, is similar to the method of determining the bit value of the FDRA domain in a case where the subband parameter value is the number $N_i$ of subbands, and will not be described again here.

In the above embodiment, the present disclosure may reduce a bit overhead of the DCI while ensuring scheduling flexibility of the DCI, effectively avoid the problem of reducing transmission efficiency of the DCI, and achieve high availability.

In addition to the above method, in an embodiment of the present disclosure, the DCI used to schedule the data transmission of the plurality of cells is configured with that a resource type is a resource allocation manner of type 1 taken RBG as the granularity, then an RIV indicated by the FDRA field is associated to an starting position of RBGs and the number of continuous RBGs.

**In** addition, based on the number of cells scheduled by the DCI, it may be determined whether to take RB as the granularity or RBG as the granularity in a case where the resource allocation manner is type 1. The number of cells may be determined based on a signaling indication or a protocol agreement, which is not limited in the disclosure.

In a possible implementation, if the DCI schedules data of one cell, the RIV indicates that the resource granularity is taken RB as the granularity. If the number of cells scheduled by the DCI is greater than 1, the RIV indicates that the resource granularity is taken RBG granularity.

Alternatively, it may be determined to use RB as the granularity or RBG as the granularity based on an indication of the FDRA field in the DCI.

In a possible implementation, the first and/or second bits in the FDRA field of the DCI sent by the base station may be used to indicate that the resource type is one of RB or RBG granularity.

In a possible implementation, a first bits and/or a second bit in the FDRA field of the DCI may be used to indicate that the resource type is one of RB or RBG as the granularity.

For example, if the first bit of the FDRA field is not occupied, that is, in a case where the resource allocation manner is type1, the first bit of the FDRA field of the DCI may be configured to indicate that the resource type is either RB or RBG as the granularity.

For another example, the first bit of the FDRA field is occupied, that is, in a case where the resource allocation manner is dynamic, the first bit of the FDRA field is configured to indicate that the resource allocation type is dynamic+type1 or dynamic+type0, where dynamic refers to as a manner the resource allocation type is dynamically switched between type0 and type1, dynamic+type1 refers to that, the base station indicates that the resource allocation type is type1 through the FDRA field after pre-indicating that the resource allocation type is dynamic through RRC signaling, dynamic+type0 refers to that, the base station indicates that the resource allocation type is type0 through the FDRA field after pre-indicating that the resource allocation type is dynamic through RRC signaling.

In the disclosure, the first bit is specifically configured to indicate that the resource allocation type is dynamic+type1. At this case, the second bit in the FDRA field of DCI may be configured to indicate that the resource type is either RB or RBG as the granularity.

The resource determination method and the multi-carrier scheduling method provided by the present disclosure are further described below with examples.

Embodiment 1, assuming that a terminal is a Rel-18 and subsequent version terminal, the terminal receives DCI for multi-cell scheduling, and receives PDSCHs of a plurality of cells or transmits PUSCHs of the plurality of cells based on indication information corresponding to the DCI.

This embodiment considers that frequency domain resource information of different scheduled cells indicated by an FDRA field of multi-cell DCI (that is, DCI configured to schedule data transmission of the plurality of cells, subsequently represented by mc DCI) is based on a scenario of a type 1 resource type. By designing the corresponding indication method of the FDRA domain, it may realize indication of multi-cell PDSCH/PUSCH frequency domain resource information by a single DCI.

**In** a possible implementation, a reference cell in a multi-cell scheduling scenario is determined. The reference cell may be determined based on a signaling indication. For example, a cell index of the reference cell is indicated. The reference cell may also be determined in a predefined manner. For example, a cell where the multi-cell DCI is received is determined as the reference cell, or a cell corresponding to a maximum number of RBs occupied by a configured BWP of a scheduled cell is determined as the reference cell, or, a cell corresponding to a minimum number of RBs occupied by the configured BWP of the scheduled cell is determined as the reference cell, or a cell corresponding to a maximum (or minimum) cell index among the scheduling cell and the scheduled cell is determined as the reference cell. The present disclosure does not limit this.

For a scheduled cell i (i.e., a first cell), the terminal determines a number $N_i$ of subbands allocated within a (frequency domain) resource range, and the number of RBs occupied by the resource range is $N_{RB, i}$.

In a possible implementation, the resource range may be a frequency domain resource occupied by the configured BWP of the scheduled cell i, or may be a frequency domain resource corresponding to a carrier where the scheduled cell i is. The present disclosure does not limit this.

In a possible implementation, a starting RB position of the first subband of the scheduled cell i may be a BWP starting position, or a RB starting position corresponding to the carrier where the scheduled cell i is, or a common frequency domain reference point Point A agreed in a protocol. The present disclosure does not limit this.

**In** a possible implementation, the number of subbands corresponding to each of all scheduled cells may be the same, for example, $N_i = N$, or may be different. The present disclosure does not limit this.

In a possible implementation, $N_i$ and/or N may be determined in a predefined manner. For example, $N_i$ is equal to the number of RBGs configured by the scheduled cell i. $N_i$ and/or N may also be determined through a signaling indication. For example, high-level signaling predefines a value set of $N_i$ and/or N, or a combination of $N_i$ values corresponding to multiple scheduled cells is predefined, and the DCI indicates one or more of the value set or a combination of values.

In a possible implementation, within the resource range configured in the scheduled cell i, the frequency domain range corresponding to $N_i$ subbands may be determined based on the following method:

$$\{0, \ \lfloor N_{RB,i}/N_i \rfloor - 1\}, \ ..., \ \{\lfloor N_{RB,i} \ (N_i - 1)/N_i \rfloor, \ N_{RB,i} - 1\}.$$

Based on the subband rule defined above, the terminal receives mc DCI and determines a frequency domain resource for data transmission by the terminal on the scheduled cell i based on a subband index indicated by an mc DCI FDRA field.

In a possible implementation, the mc DCI FDRA field indicates the corresponding subband index in a separate manner, and the frequency domain resources corresponding to different scheduled cells are indicated in different bits. For the scheduled cell i, a subband of the scheduled cell I for transmission is determined by an i-th bit interval, and the number of bits occupied by the i-th bit interval is determined based on the number $N_i$ of subbands. Multiple scheduled cells correspond one-to-one to multiple bits intervals. The multiple scheduled cells correspond one-to-one to multiple bits intervals based on an ascending (or descending) order of ID numbers of the multiple cell, or the multiple scheduled cells correspond one-to-one to multiple bits intervals based on an ascending (or descending) order of indexes of a cell where the DCI is received and other scheduled cells.

In a possible implementation, the mc DCI FDRA field indicates the corresponding subband index in a shared manner, and the number of subbands corresponding to each of different cells is the same (equal to N), then the subband indexes corresponding to different scheduled cells are the same, both equal to the subband index indicated by the mc The DCI FDRA field , and the number of bits occupied by the mc DCI FDRA field is equal to $\lceil \log_2(N) \rceil$.

In a possible implementation, the mc DCI FDRA field indicates the corresponding subband index in a shared manner, and the number of subbands corresponding to each of different cells is not exactly the same. The subband index of the scheduled cell i is determined based on the reference cell.

1.1. The mc DCI FDRA field indicates the subband index of a reference cell j, and the number of bits occupied by the corresponding FDRA field is equal to $\lceil \log_2(N_{RB,j}) \rceil$.

1.2. If the subband index indicated by the mc DCI FDRA field is less than or equal to $N_{RB,i}$ - 1, the subband index corresponding to the cell i for data transmission is equal to the subband index of the reference cell j.

1.3. If the subband index indicated by the mc DCI FDRA field is greater than $N_{RB,i}$ - 1, the subband index corresponding to the cell i for data transmission is equal to $N_{RB,i}$ - 1.

In a possible implementation, the mc DCI FDRA field indicates the corresponding subband index in a shared manner, and the subband index of the scheduled cell i is determined based on the reference cell and an offset relative to the subband index of the reference cell.

The offset of the scheduled cell i relative to the subband index of the reference cell may be measured at a granularity of RB, a granularity of configuration RBG of the reference cell or a granularity of the first subband. The first subband may be equal to the subband corresponding to the scheduled cell i, or take a preset number of RBs as the granularity. For example, 6 RBs form one first subband.

The mc DCI FDRA field includes two parts of first bits and additional bits. The first bits indicate the subband index of the reference cell, and the additional bits indicate offsets of the RB/RBG/first subband of other scheduled cells relative to the subband index of the reference cell.

The number of bits occupied by the first bits of the corresponding FDRA field is equal to $\lceil \log_2(N_{RB,j}) \rceil$, where j is the reference cell, and the additional bits are formed by a plurality of second bits intervals. Except for the reference cell, other scheduled cells correspond to the second bits intervals one by one, other scheduled cells correspond to the second bits intervals one by one based on an ascending (descending) order of sequence numbers of the other scheduled cells.

The subband index corresponding to the scheduled cell i for data transmission is determined jointly by a subcarrier index defined by the reference cell and the offsets of the RB/RBG/first subband indicated by additional bits. The specific determination method is as follows.

The first subband index of the scheduled cell i is determined. The first subband index is determined based on the subband index of the reference cell. The determination method is the same as that described in 1.2 and 1.3;

A sum value of the RB starting position index corresponding to the first subband index and the number of RBs included in the offset of the RB/RBG/subband indicated by the second bits corresponding to the scheduled cell i is determined, and a remainder $N_{RB,i}$ between the sum value and the number of RBs included in the frequency domain range is taken to determine the RB starting position for the data transmission in the frequency domain range of the scheduled cell i.

The number of continuous RBs over which the scheduled cell i performs data transmission in the frequency domain range is determined. In a possible implementation, the number of continuous RBs is the same as the number of continuous RBs configured in the subband of the reference cell; or, the number of continuous RBs is the same as the number of continuous of the first subband of the scheduled cell i; or, the above number of continuous RBs is equal to

$$\lfloor N_{RB,i}/N_i \rfloor.$$

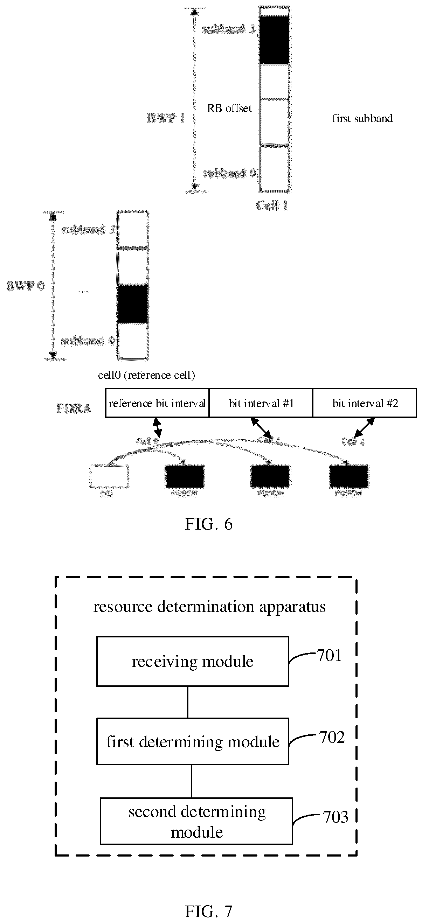

For example, as shown in FIG. 6, taken an example of the mc DCI FDRA field including two part of first bits and additional bits, and N=4, and the number of continuous RBs that the scheduled cell i performs the data transmission within the frequency domain range being equal to the number of RBs that the first subband lasts, a specific implementation is illustrated.

Cell #0 is a reference cell, and a reference bit interval is prior to other bit intervals. Cell#1 and cell#2 correspond to bit interval #1 and bit interval #2 respectively. A reference subband index indicated by the reference bit interval is 1, and the offset is taken RB as the granularity. Cell#1 determines that the first subband index is also 1, and a sum value of the starting RB index of the first subband index and the offset is obtained to determine the starting RB index of cell#1 for data transmission. The number of continuous RBs of cell#1 for data transmission is the same as the number of RBs included in subband#1 of the reference cell.

This embodiment uses subband as the granularity to determine the FDRA resources for different scheduled cells, which may effectively reduce overhead of multi-cell DCI bits, avoid a transmission code rate of multi-cell DCI being too high, and avoid loss of DCI transmission performance, thus reducing cell scheduling performance.

Embodiment 2, as described in Embodiment 1, assuming that a terminal is a Rel-18 and subsequent version terminal, the terminal receives DCI for multi-cell scheduling, and receives PDSCHs of a plurality of cells or transmits PUSCHs of the plurality of cells based on indication information corresponding to the DCI.

This embodiment considers that frequency domain resource information of different scheduled cells indicated by an FDRA field of multi-cell DCI is based on a scenario of a type 1 resource type. By designing the corresponding indication method of the FDRA domain, it may realize indication of multi-cell PDSCH/PUSCH frequency domain resource information by a single DCI.

**In** a possible implementation, a reference cell in a multi-cell scheduling scenario is determined. The reference cell can be determined based on a signaling indication. For example, a cell id of the reference cell is indicated. The reference cell may also be determined in a predefined manner. For example, a cell where the multi-cell DCI is received is determined as the reference cell, or a cell corresponding to a maximum number of RBs occupied by a configured BWP of a scheduled cell is determined as the reference cell, or, a cell corresponding to a minimum number of RBs occupied by the configured BWP of the scheduled cell is determined as the reference cell, or a cell corresponding to a maximum (or minimum) cell index among the scheduling cell and the scheduled cell is determined as the reference cell. The present disclosure does not limit this.

For a scheduled cell i, the terminal determines the number $M_i$ of RBs occupied by a subband allocated within the (frequency domain) resource range, and the number of RBs occupied by the resource range is $N_{RB,i}$.

In a possible implementation, the resource range may be a frequency domain resource occupied by the configured BWP of the scheduled cell i, or may be a frequency domain resource corresponding to a carrier where the scheduled cell i is. The present disclosure does not limit this.

In a possible implementation, a starting RB position of the first subband of the scheduled cell i may be a BWP starting position, or a RB starting position corresponding to the carrier where the scheduled cell i is, or Point. A. The present disclosure does not limit this.

In a possible implementation, the number of RBs occupied by the corresponding subband of each of all scheduled cells may be the same, for example, $M_i$=M, or may be different. The present disclosure does not limit this.

In a possible implementation, the $M_i$ and/or M may be determined in a predefined manner. For example, the $M_i$ is equal to the number of RBs occupied by the configured RBG of the scheduled cell i. $M_i$ and/or M may also be determined through a signaling indication. For example, high-level signaling predefines a value set of $M_i$ and/or M, or a combination of $M_i$ values corresponding to multiple scheduled cells is predefined, and the DCI indicates one or more of the value set or a combination of values.

In a possible implementation, within the resource range configured by the scheduled cell i, determining the number of subbands and the frequency domain range corresponding to the subband based on $M_i$ is similar to the RBG method.

In a frequency domain range with $N_{RB,i}^{start}$ as the RB starting position and the number of continuous RBs being $N_{RB,\,i}$, based on the subband granularity $M_i$, the number $N_i$ of subbands by for the scheduled cell i is equal to:

$$N_i = \left\lceil \left( N_{RB,i} + \left( N_{RB,i}^{start} \bmod M_i \right) \right) / M_i \right\rceil,$$

where the number of RBs occupied by the first subband is: $sBAND_0^{size} = Mi - N_{RB,i}^{start} \bmod M_i$ ;

If $\left(N_{RB,i}^{start} + N_{RB,i}\right) \bmod M_i > 0$ , then the number of RBs occupied by the last subband is: $sBAND_{last}^{size} = \left(N_{RB,i}^{start} + N_{RB,i}\right) \bmod M_i$ , otherwise, the number of RBs occupied by the last subband is equal to $M_i$;

the number of RBs occupied by other subband is equal to $M_i$.

Based on the subband rule defined above, the terminal receives mc DCI and determines a frequency domain resource for data transmission by the terminal on the scheduled cell i based on a subband index indicated by an mc DCI FDRA field. The specific indication manner that the mc DCI FDRA indicates the frequency domain resource for data transmission of the scheduled cell i in a separate or shared manner is the same as that in Embodiment 1, which will not be described again here.

This embodiment provides another method to define subband, and uses the defined subband as the granularity to determine the FDRA resources of different scheduled cell data, which may effectively reduce bits overhead of the multi-cell DCI and avoid a transmission code rate of the multi-cell DCI being too high, avoid loss of DCI transmission performance, thus reducing cell scheduling performance.

Embodiment 3, as described in Embodiment 1, assuming that a terminal is a Rel-18 and subsequent version terminal, the terminal receives DCI for multi-cell scheduling, and receives PDSCHs of a plurality of cells or transmits PUSCHs of the plurality of cells based on indication information corresponding to the DCI.

This embodiment considers that frequency domain resource information of different scheduled cells indicated by an FDRA field of multi-cell DCI is based on a scenario of a type 1 resource type. By designing the corresponding indication method of the FDRA domain, it may realize indication of multi-cell PDSCH/PUSCH frequency domain resource information by a single DCI.

As a possible implementation, mc DCI FDRA adopts the following implementations.

**Implementation** 1, DCI format 1_2 corresponds to a resource allocation manner of type1 with RBG as the resource granularity. An RIV indicated by the mc DCI FDRA field is associated with an RBG starting position and the number of continuous RBGs.

Implementation 2, DCI format 1_1 corresponds to a resource allocation manner of type 1 with RB as the resource granularity. The RIV indicated by the mc DCI FDRA field is associated with an RB starting position and the number of continuous RBs.

Under a condition that the mc DCI FDRA field adopts the resource allocation type of type 1, whether to adopt Implementation 1 or Implementation 2 may be determined in a predetermined manner. For example, if the number of cells scheduled simultaneously by mc DCI is less than or equal to P, the RIV indicates that the resource is taken RB as the granularity. If the number of cells scheduled simultaneously by mc DCI is greater than P, the RIV indicates that the resource is taken RBG as the granularity.

**P** may be determined in a predefined manner, for example, P=1. P may also be determined in a signaling manner. For example, RRC signaling defines a plurality of candidate values of P, and MAC CE/DCI indicates a specific value.

Under a condition that the mc DCI FDRA field adopts the resource allocation type of type 1, whether to adopt Implementation 1 or Implementation 2 may be determined by a signaling indication. For example, it may indicate that the resource type is one of Implementation 1 or Implementation by the first bit and/or the second bit of the mc DCI FDRA field.

This embodiment uses RBG as the granularity and uses the RIV to indicate the FDRA resources for different scheduled cells, which may effectively reduce bits overhead of the mc DCI and avoid a transmission code rate of the mc DCI being too high and avoid loss of the DCI transmission performance, thus reducing the cell scheduling performance. At this case, based on different scenarios of the number of mc DCI scheduling cells, different FDRA resource indication manners may be flexibly selected, and the bits overhead of the mc DCI may be reduced.

Corresponding to the foregoing embodiments of the method for application function implementation, the present disclosure also provides an embodiment of an apparatus for application function implementation.

With reference to FIG. 7, FIG. 7 is a block diagram illustrating a resource determination apparatus according to an embodiment. The apparatus is applied to a terminal, and includes:

a receiving module 701 configured to receive downlink control information (DCI) sent by a base station; in which the DCI is configured to schedule data transmission of a plurality of cells;

a first determining module 702, configured to determine a subband parameter value of a first cell allocated within a frequency domain resource range, in which the first cell is any one of the plurality of cells;

a second determining module 703, configured to determine a frequency domain resource for data transmission of the first cell based on an indication value of a frequency domain resource allocation (FDRA) field in the DCI and the subband parameter value of the first cell.

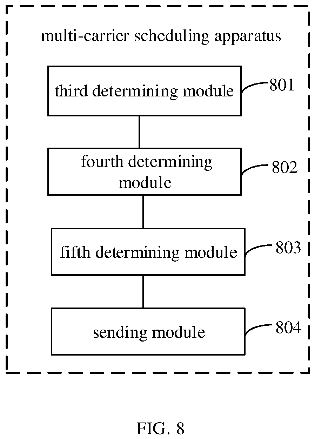

With reference to FIG. 8, FIG. 8 is a block diagram illustrating a multi-carrier scheduling apparatus according to an embodiment. The apparatus is applied to a base station, and includes:

a third determining module 801, configured to determine a frequency domain resource for data transmission of each cell scheduled by downlink control information (DCI); wherein the DCI is configured to schedule data transmission of a plurality of cells;

a fourth determining module 802, configured to determine a subband parameter value of each cell allocated within a frequency domain resource range;

a fifth determining module 803, configured to determine a bit value of a frequency domain resource allocation (FDRA) field in the DCI at least based on a frequency domain resource and a subband parameter value of one of the plurality of cells; and

a sending module 804, configured to send the DCI to a terminal.

The apparatus embodiments basically correspond to the method embodiments, and the related contents can refer to part of the descriptions of the method embodiments. The above-described apparatus embodiments are merely schematic, the modules described above as separate components may or may not be physically separated, and the components displayed as modules may or may not be physical modules, i.e., the components may be located in one area or may be distributed to multiple network modules. Some or all of these modules can be selected according to practical needs to achieve the purpose of the solution of the disclosure. Those skilled in the art can understand and implement the solution without inventive works.

Correspondingly, the present disclosure also provides a computer-readable storage medium having computer programs stored thereon, in which the computer program is configured to execute any one of the above described method at a base station side.

Correspondingly, the present disclosure also provides a computer-readable storage medium having computer programs stored thereon, in which the computer program is configured to execute any one of the resource determination method as described above.

Correspondingly, the present disclosure also provides a computer-readable storage medium having computer programs stored thereon, in which the computer program is configured to execute any one of the multi-carrier scheduling method as described above.

Correspondingly, the present disclosure also provides a resource determination apparatus. The apparatus includes:

a processor; and

a memory, configured to store instructions executable by the processor;

**in** which the processor is configured to execute any one of the resource determination method as described above.

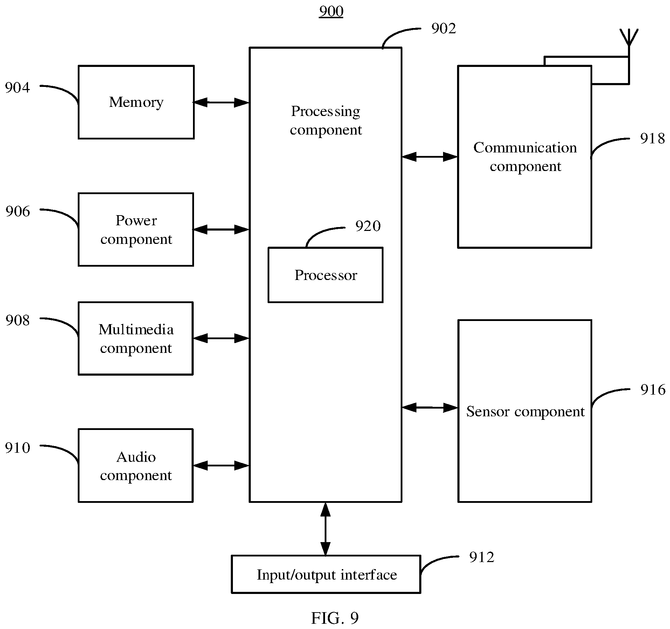

FIG. 9 is a schematic structural diagram illustrating a resource determination apparatus 900 according to an example embodiment of the present disclosure. For example, the apparatus 900 may be a mobile phone, a tablet computer, an e-book reader, a multimedia playback device, a wearable device, a vehicle-mounted user equipment, an iPad, a smart TV and other terminals.

As shown in FIG. 9, the apparatus 900 may include one or more of the following components: a processing component 902, a memory 904, a power component 906, a multimedia component 908, an audio component 910, an input/output (I/O) interface 912, a sensor component 916, and a communication component 918.

The processing component 902 typically controls overall operations of the apparatus 900, such as the operations associated with display, telephone calls, data communications, camera operations, and recording operations. The processing component 902 may include one or more processors 920 to perform all or part of the steps in the resource determination method as described above. Moreover, the processing component 902 may include one or more modules which facilitate the interaction between the processing component 902 and other components. For example, the processing component 902 may include a multimedia module to facilitate the interaction between the multimedia component 908 and the processing component 902. For another example, the processing component 902 may read executable instructions from the memory, to implement steps of the resource determination method provided in the above embodiments.

The memory 904 is configured to store various types of data to support the operation of the apparatus 900. Examples of such data include instructions for any applications or methods operated on the apparatus 900, contact data, phonebook data, messages, pictures, video, etc. The memory 904 may be implemented using any type of volatile or non-volatile memory devices, or a combination thereof, such as a Static Random Access Memory (SRAM), an Electrically Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 906 provides power to various components of the apparatus 900. The power component 906 may include a power management system, one or more power sources, and any other components associated with the generation, management, and distribution of power in the device 800.

The multimedia component 908 includes a screen providing an output interface between the apparatus 900 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front-facing camera and/or a rear-facing camera. When the apparatus 900 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 910 is configured to output and/or input audio signals. For example, the audio component 910 includes a microphone (MIC) configured to receive an external audio signal when the apparatus 900 is in an operation mode, such as a call mode, a recording mode, and a voice recognition mode. The received audio signal may be further stored in the memory 904 or transmitted via the communication component 918. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 916 includes one or more sensors to provide status assessments of various aspects of the apparatus 900. For instance, the sensor component 916 may detect an open/closed status of the apparatus 900, relative positioning of components, e.g., the display and the keypad, of the apparatus 900, a change in position of the apparatus 900 or a component of the apparatus 900, a presence or absence of user contact with the apparatus 900, an orientation or an acceleration/deceleration of the apparatus 900, and a change in temperature of the apparatus 900. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 916 may also include an accelerometer sensor, a gyroscope sensor, a magnetic sensor, a pressure sensor, or a temperature sensor.

The communication component 918 is configured to facilitate communication, wired or wirelessly, between the apparatus 900 and other devices. The apparatus 900 can access a wireless network based on a communication standard, such as WiFi, 2G, 3G, 4G, 5G, 6G or a combination thereof. In an exemplary embodiment, the communication component 918 receives a broadcast signal or broadcast associated information from an external broadcast management system via a broadcast channel. In an exemplary embodiment, the communication component 918 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

**In** an example embodiment, the device 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the resource determination method at the terminal side as described above .

**In** an example embodiment, there is also provided a non-transitory computer-readable storage medium including executable instructions, such as the memory 904, executable by the processor 920 in the device 800, for performing the above resource determination method. For example, the non-transitory computer-readable storage medium may be a ROM, a Random Access Memory (RAM), a CD-ROM, a magnetic tape, a floppy disc, and an optical data storage device.

Correspondingly, the present disclosure also provides a multi-carrier scheduling apparatus. The apparatus includes:

a processor; and
a memory, configured to store instructions executable by the processor;
**in** which the processor is configured to execute any one of the multi-carrier scheduling method as described above.

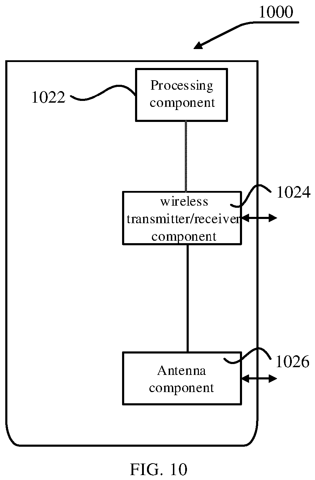

As shown in FIG. 10, FIG. 10 is a schematic structural diagram illustrating a multi-carrier scheduling apparatus 1000 according to an example embodiment. The apparatus 1000 may be provided as a base station. Referring to FIG. 10, the apparatus 1000 includes a processing component 1022, a wireless transmitter/receiver component 1024, an antenna component 1026, and a signal processing portion specific to a wireless interface. The processing component 1022 may include one or more processors.

One of the processors of the processing component 1022 may be configured to implement any one of the multi-carrier scheduling method as described above.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

**Claims**

1.  A resource determination method, performed by a terminal, comprising:

    receiving downlink control information (DCI) sent by a base station; wherein the DCI is configured to schedule data transmission of a plurality of cells;
    determining a subband parameter value of a first cell allocated within a frequency domain resource range, wherein the first cell is any one of the plurality of cells; and
    determining a frequency domain resource for data transmission of the first cell based on an indication value of a frequency domain resource allocation (FDRA) field in the DCI and the subband parameter value of the first cell.

2.  The method according to claim 1, wherein the subband parameter value is any of:

    a number of subbands; or
    a subband granularity.

3.  The method according to claim 1 or 2, further comprising any of:

    determining the subband parameter value of the first cell based on a signaling indication sent by the base station; or
    determining the subband parameter value of the first cell based on a protocol agreement.

4.  The method according to claim 2, wherein determining the frequency domain resource for the data transmission of the first cell based on the indication value of the FDRA field in the DCI and the subband parameter value of the first cell comprises:

    determining a resource block (RB) range occupied by each subband of the first cell based on a number of RBs occupied by a frequency domain resource range of the first cell and the subband parameter value of the first cell;
    determining a first subband index for the data transmission of the first cell based on the indication value of the FDRA field;
    determining a RB range occupied by a first subband as the frequency domain resource for the data transmission of the first cell.

5.  The method according to claim 4, wherein the plurality of cells have different numbers of subbands, and the FDRA field is configured to indicate:
    a reference subband index for data transmission of a reference cell; wherein the reference cell is a cell different from the first cell among the plurality of cells.

6.  The method according to claim 5, wherein determining the first subband index for the data transmission of the first cell based on the indication value of the FDRA field comprises:

determining the reference subband index based on a bit value of the FDRA field;
determining that the first subband index for the data transmission of the first cell is equal to the reference subband index in a case that the reference subband index is within a subband index range of the first cell;
determining that the first subband index for the data transmission of the first cell is equal to a preset subband index in a case that the reference subband index is beyond the subband index range of the first cell.

7. The method of claim 4, wherein the DCI comprises a plurality of FDRA fields; wherein the number of FDRA fields comprised in the DCI is equal to the number of cells in the plurality of cells;
wherein an i-th FDRA field is configured to indicate:
a subband index for data transmission of an i-th scheduled cell among the plurality of cells, where i is a positive integer less than or equal to the number of cells.

8. The method according to claim 7, wherein a cell index of the i-th scheduled cell is less than a cell index of an (i+1)-th scheduled cell; or
the cell index of the i-th scheduled cell is greater than the cell index of the (i+1)-th scheduled cell.

9. The method according to claim 7, wherein determining the first subband index for the data transmission of the first cell based on the indication value of the FDRA field comprises:

determining a first FDRA field corresponding to the first cell in a plurality of FDRA fields comprised in the DCI;
determining the first subband index for the data transmission of the first cell based on a bit value of the first FDRA field.

10. The method according to claim 4, wherein the plurality of cells have the same number of subbands, and the FDRA field is configured to indicate:
a subband index of any one of the plurality of cells for data transmission; wherein the subband index of each cell of the plurality of cells for data transmission is the same.

11. The method according to claim 2, wherein determining the frequency domain resource for the data transmission of the first cell based on the indication value of the FDRA field in the DCI and the subband parameter value of the first cell comprises:

determining a RB range occupied by each subband of the first cell based on a number of RBs occupied by a frequency domain resource range of the first cell and the subband parameter value of the first cell;
determining a starting RB index for the data transmission of the first cell based on the indication value of the FDRA field;
determining a number of continuous RBs for the data transmission of the first cell.

12. The method according to claim 11, wherein the FDRA field is configured to indicate:

a reference subband index for data transmission of a reference cell; wherein the reference cell is a cell different from the first cell among the plurality of cells;
offsets of starting RB indexes for data transmissions of other cells except the reference cell in the plurality of cells relative to a starting position and/or a maximum frequency domain position of the reference subband.

13. The method according to claim 12, wherein a granularity of the offset is any of:

a RB;
a RBG; or
a specified subband including a specified number of RBs.

14. The method according to claim 12, wherein determining the starting RB index for the data transmission of the first cell based on the indication value of the FDRA field comprises:

determining an offset corresponding to the first cell based on a bit value of a first bit interval corresponding to the first cell in the FDRA field;
determining the starting RB index for the data transmission of the first cell based on the reference subband index and the offset corresponding to the first cell.

15. The method according to claim 14, wherein, in the FDRA domain, a reference bit interval corresponding to the reference cell is prior to other bit intervals;

in the other bit intervals, a cell index corresponding to an m-th bit interval is less than a cell index corresponding to an (m+1)-th bit interval; or
the cell index corresponding to the m-th bit interval is greater than the cell index corresponding to the (m+1)-th bit interval; where m is a positive integer smaller than the number of cells scheduled by the DCI.

16. The method of claim 14, wherein determining the starting RB index for the data transmission of the first cell based on the reference subband index and the offset corresponding to the first cell comprises:

determining that the first subband index for the data transmission of the first cell is equal to the reference subband index in a case that the reference subband index is within a subband index range of the first cell;
determining that the first subband index for the data transmission of the first cell is equal to a preset subband index in a case that the reference subband index is beyond the subband index range of the first cell;
determining the starting RB index for the data transmission of the first cell based on the starting RB index of the first subband and the offset corresponding to the first cell.

17. The method of claim 16, wherein determining the number of continuous RBs for the data transmission of the first cell comprises any of:

determining that the number of continuous RBs for the data transmission of the first cell is equal to a number of RBs comprised in a reference subband of the reference cell;
determining that the number of continuous RBs for the data transmission of the first cell is equal to a number of RBs comprised in the first subband.

18. A multi-carrier scheduling method, performed by a base station, comprising:

determining a frequency domain resource for data transmission of each cell scheduled by downlink control information (DCI); wherein the DCI is configured to schedule data transmission of a plurality of cells;
determining a subband parameter value of each cell allocated within a frequency domain resource range;
determining a bit value of a frequency domain resource allocation (FDRA) field in the DCI at least based on a frequency domain resource and a subband parameter value of one of the plurality of cells; and sending the DCI to a terminal.

19. The method according to claim 18, wherein the subband parameter value is any of:

a number of subbands; or
a subband granularity.

20. The method according to claim 18 or 19, further comprising any of:

sending a signaling indicating the subband parameter value of each cell to the terminal; or
determining the subband parameter value of each cell based on a protocol agreement.

21. The method according to claim 19, wherein determining the frequency domain resource for the data transmission of each cell scheduled by the DCI comprises:

determining a resource block (RB) range occupied by each subband of the first cell based on a number of RBs occupied by a frequency domain resource range of the first cell and the subband parameter value of the first cell, wherein the first cell is any one of the plurality of cells;
determining the first subband index for the data transmission of the first cell;
determining that the frequency domain resource for the data transmission of the first cell is a RB range occupied by a first subband.

22. The method according to claim 21, wherein determining the first subband index for the data transmission of the first cell comprises:

determining that the first subband index is equal to a reference subband index in a case that the reference subband index for the data transmission of the reference cell is within a subband index range of the first cell, wherein the reference cell is a cell different from the first cell among the plurality of cells;

determining that the first subband index for the data transmission of the first cell is equal to a preset subband index in a case that the reference subband index is beyond the subband index range of the first cell.

23. The method according to claim 22, wherein the plurality of cells have different numbers of subbands, and the FDRA field is configured to indicate:
the reference subband index.

24. The method of claim 21, wherein the DCI comprises a plurality of FDRA fields; wherein the number of FDRA fields comprised in the DCI is equal to the number of cells in the plurality of cells;
wherein an i-th FDRA field is configured to indicate:
a subband index for data transmission of an i-th scheduled cell among the plurality of cells, where i is a positive integer less than or equal to the number of cells.

25. The method according to claim 24, wherein a cell index of the i-th scheduled cell is less than a cell index of an (i+1)-th scheduled cell; or
the cell index of the i-th scheduled cell is greater than the cell index of the (i+1)-th scheduled cell.

26. The method of claim 24, wherein determining the bit value of the FDRA field in the DCI at least based on the frequency domain resource and the subband parameter value of one of the plurality of cells comprises:

in a plurality of FDRA fields comprised in the DCI, determining a first FDRA field corresponding to the first cell;
determining a bit value of the FDRA field corresponding to the first cell based on the first subband index.

27. The method according to claim 21, wherein the plurality of cells have the same number of subbands, and the FDRA field is configured to indicate:
a subband index of any one of the plurality of cells for data transmission; wherein the subband index of each cell of the plurality of cells for data transmission is the same.

28. The method according to claim 19, wherein determining the frequency domain resource for the data transmission of each cell scheduled by the DCI comprises:

determining a starting RB index for data transmission of a first cell; wherein the first cell is any one of the plurality of cells;
determining a number of continuous RBs for the data transmission of the first cell.

29. The method according to claim 28, wherein determining the starting RB index for the data transmission of the first cell comprises:
determining the starting RB index for the data transmission of the first cell based on a reference subband index of a reference cell and an offset of the starting RB index for the data transmission of the first cell relative to a starting position and/or a maximum frequency domain position of a reference subband; wherein the reference cell is a cell different from the first cell among the plurality of cells.

30. The method according to claim 29, wherein determining the starting RB index for the data transmission of the first cell based on the reference subband index of the reference cell and the offset of the starting RB index for the data transmission of the first cell relative to the starting position and/ the a maximum frequency domain position of the reference subband comprises:

determining that the first subband index for the data transmission of the first cell is equal to the reference subband index in a case that the reference subband index is within a subband index range of the first cell;
determining that the first subband index for the data transmission of the first cell is equal to a preset subband index in a case that the reference subband index is beyond the subband index range of the first cell;
determining the starting RB index for the data transmission of the first cell based on the starting RB index of the first subband and the offset corresponding to the first cell.

31. The method of claim 30, wherein determining the number of continuous RBs for the data transmission of the first cell comprises any of:

determining that the number of continuous RBs for the data transmission of the first cell is equal to a number of RBs comprised in a reference subband of the reference cell;
determining that the number of continuous RBs for the data transmission of the first cell is equal to a number of RBs comprised in the first subband.

32. The method according to any one of claims 28 to 31, wherein the FDRA field is configured to indicate:

a reference subband index; wherein a reference cell is a cell different from the first cell among the plurality of cells;
offsets of starting RB indexes for data transmissions of other cells except the reference cell in the plurality of cells relative to a starting position and/or a maximum frequency domain position of the reference subband.

33. The method according to claim 32, wherein a granularity of an offset of the starting RB index relative to the reference subband index is any one of:

a RB;
a RBG; or
a specified subband including a specified number of RBs.

34. The method according to claim 32, wherein, in the FDRA domain, a reference bit interval corresponding to the reference cell is prior to other bit intervals;

in the other bit intervals, a cell index corresponding to an m-th bit interval is less than a cell index corresponding to an (m+1)-th bit interval; or
the cell index corresponding to the m-th bit interval is greater than the cell index corresponding to the (m+1)-th bit interval; where m is a positive integer smaller than the number of cells scheduled by the DCI.

35. A resource determination apparatus, applied to a terminal, comprising:

a receiving module configured to receive downlink control information (DCI) sent by a base station; wherein the DCI is configured to schedule data transmission of a plurality of cells;
a first determining module, configured to determine a subband parameter value of a first cell allocated within a frequency domain resource range, wherein the first cell is any one of the plurality of cells;
a second determining module, configured to determine a frequency domain resource for data transmission of the first cell based on an indication value of a frequency domain resource allocation (FDRA) field in the DCI and the subband parameter value of the first cell.

36. A multi-carrier scheduling apparatus, applied to a base station, comprising:

a third determining module, configured to determine a frequency domain resource for data transmission of each cell scheduled by downlink control information (DCI); wherein the DCI is configured to schedule data transmission of a plurality of cells;
a fourth determining module, configured to determine a subband parameter value of each cell allocated within a frequency domain resource range;
a fifth determining module, configured to determine a bit value of a frequency domain resource allocation (FDRA) field in the DCI at least based on a frequency domain resource and a subband parameter value of one of the plurality of cells; and
a sending module, configured to send the DCI to a terminal.

37. A computer-readable storage medium having a computer program stored thereon, wherein the computer program is configured to execute the resource determination method according to any one of claims 1 to 17.

38. A computer-readable storage medium having a computer program stored thereon, wherein the computer program is configured to execute the multi-carrier scheduling method according to any one of claims 18 to 34.

39. A resource determination apparatus, comprising:

a processor; and
a memory, configured to store instructions executable by the processor;
wherein the processor is configured to execute the resource determination method according to any one of claims 1 to 17.

40. A multi-carrier scheduling apparatus, comprising:

a processor; and
a memory, configured to store instructions executable by the processor;
wherein the processor is configured to execute the multi-carrier scheduling method according to any one of claims 18 to 34.

Cell 0       Cell 1       Cell 2

DCI      PDSCH      PDSCH      PDSCH

FIG. 1

receiving downlink control information (DCI) sent by a base station; wherein the DCI is configured to schedule data transmission of a plurality of cells     201

determining a subband parameter value of a first cell allocated within a frequency domain resource range     202

determining a frequency domain resource for data transmission of the first cell based on an indication value of a frequency domain resource allocation (FDRA) field in the DCI and the subband parameter value of the first cell     203

FIG. 2

receiving downlink control information (DCI) sent by a base station; wherein the DCI is configured to schedule data transmission of a plurality of cells — 301

determining a subband parameter value of a first cell allocated within a frequency domain resource range — 302

determining a resource block (RB) range occupied by each subband of the first cell based on a number of RBs occupied by a frequency domain resource range of the first cell and the subband parameter value of the first cell — 303

determining a first subband index for the data transmission of the first cell based on the indication value of the FDRA field — 304

determining a RB range occupied by a first subband as the frequency domain resource for the data transmission of the first cell — 305

FIG. 3

receiving downlink control information (DCI) sent by a base station; wherein the DCI is configured to schedule data transmission of a plurality of cells — 401

determining a subband parameter value of a first cell allocated within a frequency domain resource range — 402

determining a RB range occupied by each subband of the first cell based on a number of RBs occupied by a frequency domain resource range of the first cell and the subband parameter value of the first cell — 403

determining a starting RB index for the data transmission of the first cell based on the indication value of the FDRA field — 404

determining a number of continuous RBs for the data transmission of the first cell — 405

FIG. 4

determining a frequency domain resource for data transmission of each cell scheduled by downlink control information (DCI); wherein the DCI is configured to schedule data transmission of a plurality of cells — 501

determining a subband parameter value of each cell allocated within a frequency domain resource range — 502

determining a bit value of a frequency domain resource allocation (FDRA) field in the DCI at least based on a frequency domain resource and a subband parameter value of one of the plurality of cells — 503

sending the DCI to a terminal — 504

FIG. 5

FIG. 6

FIG. 7

FIG. 8

900

902

904 — Memory

Processing
component

918

Communication
component

906 — Power
component

920

Processor

908 — Multimedia
component

910 — Audio
component

916

Sensor component

912

Input/output interface

FIG. 9

1000

Processing
component

1022

wireless
transmitter/receiver
component

1024

Antenna
component

1026

FIG. 10

<table>
<tr><td colspan="2" align="center">**INTERNATIONAL SEARCH REPORT**</td><td>International application No.<br><br>**PCT/CN2022/103180**</td></tr>
</table>

**A.    CLASSIFICATION OF SUBJECT MATTER**

H04W72/12(2023.01)i;H04W72/04(2023.01)i;H04L5/00(2006.01)i

According to International Patent Classification (IPC) or to both national classification and IPC

**B.    FIELDS SEARCHED**

Minimum documentation searched (classification system followed by classification symbols)

H04W,H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 资源分配, 多, 载波, 调度, 子带, 小区, 索引, 下行控制信息, resource, allocation, DCI, FDRA, cell, 5G, PDSCH, PDCCH, BWP, RB

**C.    DOCUMENTS CONSIDERED TO BE RELEVANT**

| Category* | Citation of document, with indication, where appropriate, of the relevant passages | Relevant to claim No. |
|---|---|---|
| X | CN 113630873 A (VIVO COMMUNICATION TECHNOLOGY CO., LTD.) 09 November 2021 (2021-11-09)<br>description, paragraphs [0030]-[0210], and figures 1-6 | 1-40 |
| X | CN 113630874 A (VIVO COMMUNICATION TECHNOLOGY CO., LTD.) 09 November 2021 (2021-11-09)<br>description, paragraphs [0112]-[0357], and figures 1-10 | 1-40 |
| A | CN 113708899 A (VIVO COMMUNICATION TECHNOLOGY CO., LTD.) 26 November 2021 (2021-11-26)<br>entire document | 1-40 |
| A | CN 114258720 A (NTT DOCOMO INC.) 29 March 2022 (2022-03-29)<br>entire document | 1-40 |
| A | US 2021160879 A1 (SAMSUNG ELECTRONICS CO., LTD.) 27 May 2021 (2021-05-27)<br>entire document | 1-40 |
| A | US 2021321400 A1 (QUALCOMM INC.) 14 October 2021 (2021-10-14)<br>entire document | 1-40 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 March 2023** | **15 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<div align="center">

**INTERNATIONAL SEARCH REPORT**
**Information on patent family members**

</div>

International application No.

**PCT/CN2022/103180**

| Patent document<br>cited in search report | | | Publication date<br>(day/month/year) | Patent family member(s) | | | Publication date<br>(day/month/year) |
|---|---|---|---|---|---|---|---|
| CN | 113630873 | A | 09 November 2021 | WO | 2021223704 | A1 | 11 November 2021 |
| CN | 113630874 | A | 09 November 2021 | WO | 2021223703 | A1 | 11 November 2021 |
| CN | 113708899 | A | 26 November 2021 | WO | 2021233289 | A1 | 25 November 2021 |
| CN | 114258720 | A | 29 March 2022 | WO | 2020255263 | A1 | 24 December 2020 |
| | | | | JP | WO2020255263 | A1 | 01 January 2022 |
| | | | | EP | 3989655 | A1 | 27 April 2022 |
| | | | | US | 2022360384 | A1 | 10 November 2022 |
| US | 2021160879 | A1 | 27 May 2021 | US | 11558873 | B2 | 17 January 2023 |
| | | | | EP | 4046449 | A1 | 24 August 2022 |
| | | | | WO | 2021101207 | A1 | 27 May 2021 |
| US | 2021321400 | A1 | 14 October 2021 | WO | 2021207416 | A1 | 14 October 2021 |
| | | | | CN | 115349293 | A | 15 November 2022 |

Form PCT/ISA/210 (patent family annex) (July 2022)